(19) Europäisches Patentamt
European Patent Office
Office européen des brevets

(11) **EP 4 645 712 A1**

(12) **EUROPEAN PATENT APPLICATION**
published in accordance with Art. 153(4) EPC

(43) Date of publication:
**05.11.2025 Bulletin 2025/45**

(21) Application number: **23917921.1**

(22) Date of filing: **26.12.2023**

(51) International Patent Classification (IPC):
*H04B 7/08* (2006.01)     *H04B 7/0413* (2017.01)
*H04L 25/02* (2006.01)    *H04L 25/03* (2006.01)

(52) Cooperative Patent Classification (CPC):
**H04B 7/0413; H04B 7/08; H04L 25/02; H04L 25/03**

(86) International application number:
**PCT/KR2023/021622**

(87) International publication number:
**WO 2024/154969 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.01.2023  KR 20230007209
30.01.2023  KR 20230012189**

(71) Applicant: **Samsung Electronics Co., Ltd.
Suwon-si, Gyeonggi-do 16677 (KR)**

(72) Inventors:
• KIM, Kyeongyeon
  Suwon-si Gyeonggi-do 16677 (KR)
• CHOI, Sangwon
  Suwon-si Gyeonggi-do 16677 (KR)
• SEO, Juhwan
  Suwon-si Gyeonggi-do 16677 (KR)
• SHIN, Heon
  Suwon-si Gyeonggi-do 16677 (KR)

(74) Representative: **HGF
HGF Limited
1 City Walk
Leeds LS11 9DX (GB)**

(54) **ELECTRONIC DEVICE AND METHOD FOR RECEIVING SIGNAL IN WIRELESS COMMUNICATION SYSTEM**

(57) A method carried out by an electronic device in a wireless communication system may comprise an operation for acquiring received signals including a received data signal and a received reference signal. The method may comprise an operation for acquiring noise and interference estimation information on the basis of channel estimation using the received reference signal. The method may comprise an operation for acquiring a weight on the basis of information related to the resolution of a receiver of the electronic device, channel estimation information, and the noise and interference estimation information. The method may comprise an operation for acquiring a signal-to-interference-plus-noise ratio (SINR) of the received reference signal on the basis of the weight and the information related to the resolution. The method may comprise an operation for carrying out decoding of the received signals on the basis of the SINR and the received data signal.

FIG. 8

**Description**

**[Technical Field]**

The present disclosure relates to a wireless communication system, and more particularly, to an electronic device and a method for receiving a signal in a wireless communication system.

**[Background Art]**

Multiple-input multiple-output (MIMO) technology is used to improve transmission/reception performance of a signal. A wireless communication system using the MIMO technology uses multiple antennas at both a transmitting end and a receiving end. A channel capacity of the wireless communication system using the MIMO technology may be greatly improved compared to that of single antenna technology.

**[Disclosure]**

**[Technical Solution]**

In embodiments, a method performed by an electronic device in a wireless communication system may comprise obtaining a reception signal including a reception reference signal and a reception data signal. The method may comprise, based on channel estimation by using the reception reference signal, obtaining noise and interference estimation information. The method may comprise, based on information related to a resolution of a receiver of the electronic device, channel estimation information, and the noise and interference estimation information, obtaining a weight. The method may comprise, based on the weight and the information related to the resolution, obtaining a signal to interference plus noise ratio (SINR) of the reception reference signal. The method may comprise, based on the SINR and the reception data signal, performing decoding of the reception signal.

According to embodiments, an electronic device in a wires communication system may comprise a transceiver. The electronic device may comprise at least one a processor. The at least one processor may be configured to obtain a reception signal including a reception reference signal and a reception data signal. The at least one processor may be configured to, based on channel estimation by using the reception reference signal, obtain noise and interference estimation information. The at least one processor may be configured to, based on information related to a resolution of a receiver of the electronic device, channel estimation information, and the noise and interference estimation information, obtain a weight. The at least one processor may be configured to, based on the weight and the information related to the resolution, obtain a signal to interference plus noise ratio (SINR) of the reception reference signal. The at least one processor may be configured to, based on the SINR and the reception data signal, perform decoding of the reception signal.

In embodiments, a method performed by an electronic device in a wireless communication system may comprise obtaining a reception signal including a reception reference signal and a reception data signal. The method may comprise, based on channel estimation by using the reception reference signal, obtaining noise and interference estimation information. The method may comprise, based on channel estimation information and the noise and interference estimation information, obtaining a weight. The method may comprise, based on the weight, obtaining a first signal to interference plus noise ratio (SINR) of the reception reference signal. The method may comprise, based on the first SINR and a regularized log-likelihood ratio corresponding to a specific bit of modulation and coding scheme (MCS), obtaining a second SINR. The method may comprise, based on the second SINR and the reception data signal, identifying an LLR for decoding.

**[Description of the Drawings]**

FIG. 1 illustrates an example of a wireless communication system.
FIG. 2 illustrates an example of a fronthaul interface.
FIG. 3 illustrates an example of a resource structure in a time domain and a frequency domain.
FIG. 4 illustrates an example of channels in a communication standard.
FIG. 5 illustrates an example of a demodulation reference signal (DMRS) in a slot.
FIG. 6 illustrates an example of a transmitting end and a receiving end of multiple input multiple output (MIMO).
FIG. 7 is a graph illustrating an example of a signal to interference plus noise ratio (SINR) according to a resolution of a receiving end.

FIG. 8 illustrates an example of a receiving end for obtaining a compensated SINR based on a resolution.

FIG. 9 illustrates an example of a receiving end for obtaining a compensated SINR based on a resolution.

FIG. 10 is a graph illustrating an example of a compensated SINR based on a resolution of a receiving end.

FIG. 11A is a graph illustrating an example of a log-likelihood ratio (LLR) according to a 256 quadrature amplitude modulation (QAM) scheme.

FIG. 11B is a graph illustrating an example of a block error rate (BLER) according to a 256 QAM modulation scheme.

FIG. 12 illustrates an example of an operation flow of an electronic device for obtaining a compensated SINR based on a resolution of a receiving end.

FIG. 13 illustrates an example of an operation flow of an electronic device for identifying an LLR based on a modulation and coding scheme (MCS).

FIG. 14 illustrates an example of a functional configuration of a terminal.

FIG. 15 illustrates an example of a functional configuration of a base station.

[Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a symbol, a message, signaling, a reference signal (RS), or data), a term referring to a resource (e.g., a symbol, a slot, a subframe, a radio frame, a subcarrier, a resource element (RE), a bandwidth part (BP), or an occasion), a term for a computation state (e.g., a step, an operation, or a procedure), a term referring to data (e.g., a packet, a user stream, information, a bit, a symbol, or a codeword), a term referring to a channel, a term referring to a component of an electronic device, and the like, that are used in the following description, are exemplified for convenience of explanation. Therefore, the present disclosure is not limited to terms described below, and another term having equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to' may be replaced with 'greater than', a condition described as 'less than or equal to' may be replaced with 'less than', and a condition described as 'greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

This disclosure describes embodiments using terms used in some communication standards (e.g., 3rd Generation Partnership Project (3GPP)), but this is merely an example for explanation. Embodiments of the present disclosure may also be applied to other communication and broadcasting systems.

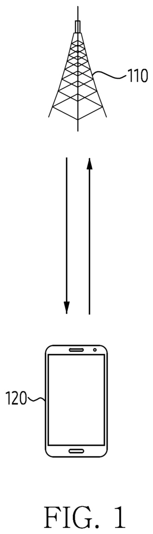

FIG. 1 illustrates an example of a wireless communication system.

Referring to FIG. 1, FIG. 1 illustrates a base station 110 and a terminal 120 as a portion of nodes using a wireless channel in a wireless communication system. Although FIG. 1 illustrates only one base station, the wireless communication system may further include another base station identical to or similar to the base station 110.

The base station 110 is a network infrastructure for providing wireless access to the terminal 120. The base station 110 has coverage defined based on a distance at which a signal may be transmitted. In addition to a base station, the base station 110 may be referred to as an 'access point (AP)', an 'eNode B (eNB)', a '5th generation node', a 'next generation node B (gNB)', a 'wireless point', a 'transmission/reception point (TRP)', or another term having a technical meaning equivalent thereto.

The terminal 120, which is a device used by a user, communicates with the base station 110 through the wireless channel. A link from the base station 110 to the terminal 120 is referred to as downlink (DL), and a link from the terminal 120 to the base station 110 is referred to as uplink (UL). In addition, although not illustrated in FIG. 1, the terminal 120 and another terminal may perform communication with each other through the wireless channel. In this case, a device-to-device link (D2D) between the terminal 120 and the other terminal is referred to as a sidelink, and the sidelink may be used interchangeably with a PC5 interface. In some other embodiments, the terminal 120 may be operated without user involvement. According to an embodiment, the terminal 120, which is a device that performs machine type communication (MTC), may not be carried by the user. In addition, according to an embodiment, the terminal 120 may be a narrowband (NB)-internet of things (IoT) device.

In addition to a terminal, the terminal 120 may be referred to as 'user equipment (UE)', 'customer premises equipment (CPE)', a 'mobile station', a 'subscriber station', a 'remote terminal', a 'wireless terminal', an 'electronic device', or another term having a technical meaning equivalent thereto.

The base station 110 may perform beamforming with the terminal 120. The base station 110 and the terminal 120 may transmit and receive a wireless signal in a relatively low frequency band (e.g., a frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3), or FR 3 of NR), and a mmWave band (e.g., 28GHz, 30GHz, 38GHz, or 60GHz). To improve a channel gain, the base station 110 and the terminal 120 may perform the beamforming. Herein, the beamforming may include transmission beamforming and reception beamforming. The base station 110 and the terminal 120 may assign directivity to a transmission signal or a reception signal. To this end, the base station 110 and the terminal 120 may select serving beams through a beam search or beam management procedure. After the serving beams are selected, subsequent communication may be performed through a resource that is in a QCL relationship with a resource that has transmitted the serving beams.

If large-scale characteristics of a channel transmitting a symbol on a first antenna port may be estimated from a channel transmitting a symbol on a second antenna port, the first antenna port and the second antenna port may be evaluated to be in the QCL relationship. For example, the large-scale characteristics may include at least one of a delay spread, a Doppler spread, a Doppler shift, an average gain, an average delay, and a spatial receiver parameter.

In FIG. 1, it has been described that both the base station 110 and the terminal 120 perform the beamforming, but embodiments of the present disclosure are not necessarily limited thereto. In some embodiments, the terminal may or may not perform the beamforming. Also, the base station may or may not perform the beamforming. That is, only one of the base station and the terminal may perform the beamforming, or both the base station and the terminal may not perform the beamforming.

In the present disclosure, a beam, which refers to a spatial flow of a signal in a wireless channel, may be formed by one or more antennas (or antenna elements), and this formation process may be referred to as beamforming. The beamforming may include at least one of analog beamforming or digital beamforming (e.g., precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, IE such as a CSI-RS resource or an SRS-resource, and the like, may be used as a configuration with respect to each reference signal, and this configuration may include information associated with the beam. The information associated with the beam may mean whether a corresponding configuration (e.g., the CSI-RS resource) uses the same spatial domain filter as another configuration (e.g., another CSI-RS resource within the same CSI-RS resource set) or a different spatial domain filter, or whether it is quasi-co-located (QCL) with a certain reference signal and, if it is QCL, what type (e.g., QCL type A, B, C, or D) it is.

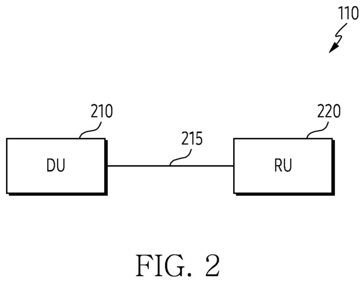

FIG. 2 illustrates an example of a fronthaul interface. The fronthaul refers to between entities between a wireless LAN and a base station, unlike a backhaul between a base station and a core network.

In FIG. 2, it illustrates an example of a fronthaul structure between a DU 210 and one RU 220, but this is only for convenience of explanation and the present disclosure is not limited thereto. In other words, an embodiment of the present invention may also be applied to a fronthaul structure between one DU and a plurality of RUs. For example, the embodiment of the present disclosure may be applied to a fronthaul structure between one DU and two RUs. In addition, the embodiment of the present disclosure may be applied to a fronthaul structure between one DU and three RUs.

Referring to FIG. 2, the base station 110 may include the DU 210 and the RU 220. A fronthaul 215 between the DU 210 and the RU 220 may be operated through an Fx interface. For an operation of the fronthaul 215, for example, an interface such as an enhanced common public radio interface (eCPRI) and a radio over Ethernet (ROE) may be used.

With development of communication technology, mobile data traffic has increased, and accordingly, a bandwidth requirement amount required by a fronthaul between a digital unit and a wireless unit have increased significantly. In a disposition such as a centralized/cloud radio access network (C-RAN), the DU may be implemented to perform functions with respect to a packet data convergence protocol (PDCP), a radio link control (RLC), a media access control (MAC), and physical (PHY), and the RU may be implemented to perform more functions with respect to a PHY layer in addition to a radio frequency (RF) function.

The DU 210 may handle an upper layer function of a wireless network. For example, the DU 210 may perform a function of a MAC layer and a portion of the PHY layer. Herein, the portion of the PHY layer, which is performed at a higher level among functions of the PHY layer, may include, for example, channel encoding (or channel decoding), scrambling (or descrambling), modulation (or demodulation), layer mapping (or layer demapping). According to an embodiment, in a case that the DU 210 follows an O-RAN standard, it may be referred to as an O-RAN DU (O-DU). The DU 210 may be represented by being replaced with a first network entity for a base station (e.g., gNB) in embodiments of the present disclosure as needed.

The RU 220 may handle a lower layer function of the wireless network. For example, the RU 220 may perform a portion of the PHY layer and an RF function. Herein, the portion of the PHY layer, which is performed at a relatively lower level than the DU 210 among the functions of the PHY layer, may include, for example, iFFT conversion (or FFT conversion), CP insertion (CP removal), and digital beamforming. The RU 220 may be referred to as an 'access unit (AU)', an 'access point (AP)', a 'transmission/reception point (TRP)', a 'remote radio head (RRH)', a 'radio unit (RU)', or another term having a technical meaning equivalent thereto. According to an embodiment, in a case that the RU 220 follows the O-RAN standard, it may be referred to as an O-RAN RU (O-RU). The RU 220 may be represented by being replaced with a second network entity for the base station (e.g., the gNB) in the embodiments of the present disclosure as needed.

In FIG. 2, it is illustrated that the base station 110 includes the DU 210 and the RU 220, but the embodiments of the present disclosure are not limited thereto. The base station according to the embodiments may be implemented as a distributed deployment according to a centralized unit (CU) configured to perform functions of upper layers (e.g., a packet data convergence protocol (PDCP), or a radio resource control (RRC)) of an access network, and a distributed unit (DU) configured to perform functions of lower layers. In this case, the distributed unit (DU) may include the digital unit (DU) and the radio unit (RU) of FIG. 1. Between a core (e.g., a 5G core or a next generation core (NGC)) network and a wireless network (RAN), the base station may be implemented in a structure disposed in an order of the CU, the DU, and the RU. An interface between the CU and the distributed unit (DU) may be referred to as an F1 interface.

The centralized unit (CU) may handle a function of a higher layer than the DU by being connected to one or more DUs. For example, the CU may handle a function of a radio resource control (RRC) and packet data convergence protocol (PDCP) layer, and the DU and the RU may handle a function of a lower layer. The DU may perform radio link control (RLC), media access control (MAC), and some functions (high PHY) of the physical (PHY) layer, and the RU may handle remaining functions (low PHY) of the PHY layer. In addition, as an example, the digital unit (DU) may be included in the distributed unit (DU) according to the distributed deployment implementation of the base station. Hereinafter, it is described as operations of the digital unit (DU) and the RU unless otherwise defined, but various embodiments of the present disclosure may be applied to both a base station deployment including the CU, or a deployment in which the DU is directly connected to a core network (i.e., implemented by being integrated as a base station (e.g., a NG-RAN node) in which the CU and the DU are one entity).

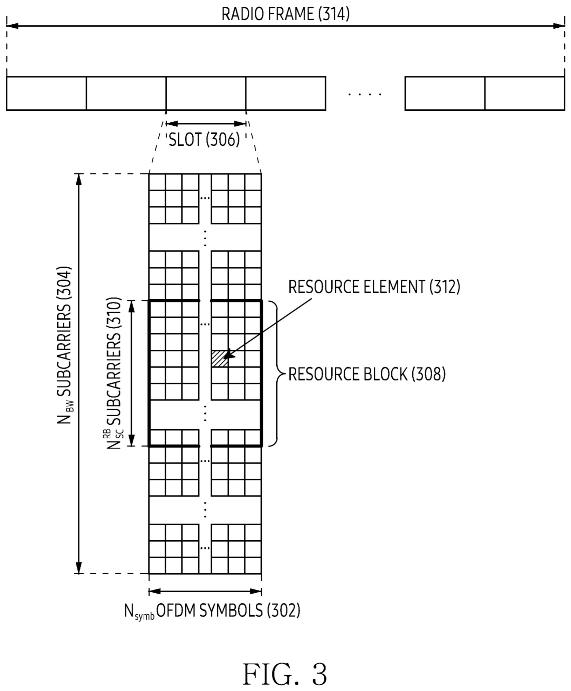

FIG. 3 illustrates an example of a resource structure in a time domain and a frequency domain. FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an OFDM symbol, and $N_{symb}$ OFDM symbols 302 are gathered to form one slot 306. A length of a subframe is defined as 1.0 ms, and a length of a radio frame 314 is defined as 10 ms. A minimum transmission unit in the frequency domain is a subcarrier, and a carrier bandwidth configuring a resource grid may be configured with $N_{BW}$ subcarriers 304.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as $N_{symb}$ consecutive OFDM symbols in the time domain and $N_{SC}^{RB}$ consecutive subcarriers in the frequency domain. In an NR system, a resource block (RB) 308 may be defined as $N_{SC}^{RB}$ consecutive subcarriers 310 in the frequency domain. One RB 308 includes $N_{SC}^{RB}$ REs 312 on a frequency axis. In general, a minimum unit of transmission of data is RB and the number of subcarriers is $N_{SC}^{RB}=12$. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

[Table 1]

| Channel Bandwidth [MHz] | SCS | 5 | 10 | 20 | 50 | 80 | 100 |
|---|---|---|---|---|---|---|---|
| Transmission Bandwidth Configuration NRB | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

[Table 2]

| Channel Bandwidth [MHz] | SCS | 50 | 100 | 200 | 400 |
|---|---|---|---|---|---|
| Transmission Bandwidth Configuration NRB | 60kHz | 66 | 132 | 264 | N/A |
| | 120kHz | 32 | 66 | 132 | 264 |

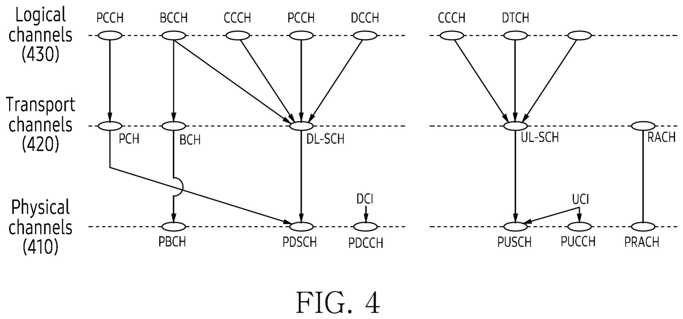

FIG. 4 illustrates an example of channels in a communication standard. The channels may include a physical channel 410, a transport channel 420, and a logical channel 430 according to layers defined in the communication standard.

Referring to FIG. 4, the physical channel 410 may provide functions (e.g., channel coding, HARQ processing, modulation, multi-antenna processing, and resource mapping) that are necessary to generate physical signals in a physical layer. In the physical layer, the physical signals are modulated in an OFDM scheme and may be transmitted in a wireless environment via a time-frequency resource (e.g., the resource of the resource grid of FIG. 3).

In downlink transmission, the physical channel 410 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and a downlink control signal may refer to symbols transmitted through the PDCCH. In addition, in a downlink, an SS/PBCH block including a synchronization signal (e.g., a primary synchronization signal (PSS), or a secondary synchronization signal (SSS)) for synchronization and a broadcast signal (e.g., PBCH) may be transmitted in addition to channels illustrated in FIG. 4. In addition, in the downlink, a channel state information-reference signal (CSI-RS) for obtaining measurement or channel information, a demodulation reference signal (DMRS) for channel estimation and demodulation, and a phase tracking reference signal (PTRS) for channel estimation and demodulation may be transmitted.

In uplink transmission, the physical channel 410 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and an uplink control signal may refer to symbols corresponding to the UCI. For example, the UCI may include at least one of a scheduling request (SR), a hybrid automatic request (HARQ)-acknowledge (ACK) bit(s), or channel state information (CSI). In addition, in uplink and in downlink, the DMRS for channel estimation and demodulation, and the PTRS may be transmitted for the channel estimation, in addition to the channels illustrated in FIG. 4.

The transport channel 420 may connect a physical layer and a medium access channel (MAC) layer located at a higher level of the physical layer, and may be classified according to how data is transmitted through a wireless interface. In the downlink, the transport channel 420 may include at least one of a paging channel (PCH) for paging, a broadcast channel (BCH) for broadcasting system information, and a downlink shared channel (DL-SCH) transmission of downlink data. In the uplink, the transport channel 420 may include at least one of a random access channel (RACH) for transmission of a random access preamble or an uplink shared channel (UL-SCH) for transmission of downlink data.

The logical channel 430 is located above the transport channel and is mapped to the transport channel 420. The logical channel 430 may be classified into a control channel for transmitting control area information and a traffic channel for transmitting user area information. The control channel of the logical channel 430 may include at least one of a paging control channel (PCCH), a broadcast control channel (BCCH), a common control channel (CCCH), or a dedicated control channel (DCCH). The traffic channel of the logical channel 430 may include a dedicated traffic channel (DTCH).

In describing embodiments of the present disclosure, 'data' may mean sequences other than a reference signal. For example, 'data' obtained by a receiver in uplink communication may mean signals transmitted through the PUSCH. However, the PUSCH is an example, and it is certain that the embodiments of the present disclosure may be applied to other channels (e.g., PDSCH, PBCH, PDCCH, and PUCCH) that require channel estimation.

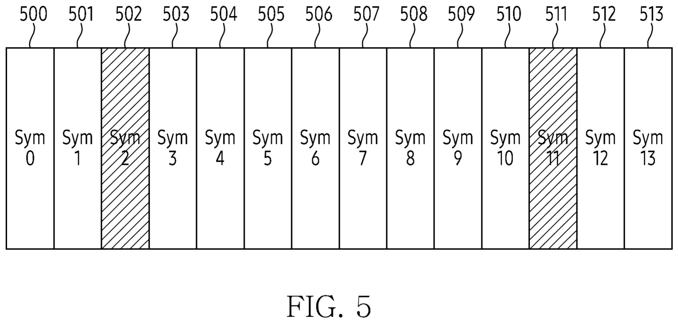

FIG. 5 illustrates an example of a demodulation reference signal (DMRS) in a slot. The DMRS is a reference signal (RS) used to demodulate data. The DMRS may be used to estimate a channel to demodulate data (e.g., PDSCH, or PUSCH) and obtain a result of the channel estimation. Hereinafter, in order to describe the channel estimation and operations using the DMRS for the channel estimation of the present disclosure, uplink transmission of an NR communication system will be described as an example. However, the embodiments of the present disclosure are not limited to uplink of the NR communication system. It is certain that the embodiments of the present disclosure may also be applied to downlink or another communication system.

Referring to FIG. 5, a base station (e.g., a base station 110) may receive a signal from a terminal (e.g., a terminal 120). The terminal 120 may transmit an uplink signal to the base station 110. The received signal may include data (hereinafter, referred to as reception data) received on an uplink channel (e.g., PUSCH). The reception data may be transmitted in data symbols of a time domain. Also, the received signal may include reference signals (hereinafter referred to as reception reference signals) (e.g., DMRS) for channel estimation and coherent demodulation of the data symbols. The reception reference signals may be transmitted in DMRS symbols of the time domain. The base station 110 may receive the reception data from the terminal 120 in the data symbols of a slot and receive the reception reference signals from the DMRS symbols. The slot may include 14 symbols (e.g., a symbol #0 500, a symbol #1 501, a symbol #2 502, a symbol #3 503, a symbol #4 504, a symbol #5 505, a symbol #6 506, a symbol #7 507, a symbol #8 508, a symbol #9 509, a symbol #10 510, a symbol #11 511, a symbol #12 512, and a symbol #13 513). At least a portion of the 14 symbols may be used to carry DMRS sequences. For example, a section of the symbol #2 502 and a section of the symbol #11 511 may include the DMRS symbols.

The base station 110 may estimate a channel between the base station 110 and the terminal 120 through the reception reference signals. The base station 110 may obtain information on a channel in which the reception reference signals have experienced. For example, the base station 110 may obtain information on a channel in which the received data has experienced through a relationship between a location where the DMRS symbols of the received reference signals are mapped and locations where the data symbols of the received data are mapped. For example, the base station 110 may obtain the information on the channel in which the received data has experienced by performing interpolation in a frequency domain or interpolation in the time domain based on the information on the channel in which the received reference signals have experienced. However, since the number of data symbols in one slot, which is a transmission unit, is generally greater than the number of DMRS symbols, an operation of estimating a channel in which each of the data symbols has experienced may require a large amount of computation. In addition, since a calculation of the DMRS symbols themselves or inter-cell interference is not reflected, reception performance may not be guaranteed. To this end, the base station 110, which is a receiving end, may utilize various reception techniques.

An embodiment of the present disclosure proposes a technique for reducing an impact of channel equalization according to a limited resolution, a channel estimation error, and a noise and interference estimation error in a MIMO system including massive multiple input multiple output (massive MIMO). The embodiment of the present disclosure relates to an electronic device and a method for improving demodulation performance and transmitting information necessary for scheduling.

A wireless communication system has been developed in a direction of supporting a higher data transmission rate to meet a growing demand with respect to wireless data traffic. In order to increase the data transmission rate, technology development has been pursued in a direction of improving frequency efficiency, but it may be difficult to satisfy an explosive demand with respect to the wireless data traffic only with such frequency efficiency improvement technology. For this reason, a multiple input multiple output (MIMO) technique has been actively studied to increase an additional data transmission rate by utilizing a spatial region. With development of antenna technology and extreme high-frequency communication such as a millimeter wave and a terahertz communication, research on a massive multiple input multiple output (MIMO) system is also being conducted.

In the multiple input multiple output system including the massive multiple input multiple output (MIMO) system, a receiver may include a linear receiver such as a matched filter (MF) and a minimum mean square error (MMSE) receiver. The receiver may include a successive interference cancellation (SIC) receiver or nonlinear receivers that expect maximum likelihood (ML) performance in an iterative manner. In the massive multiple input multiple output system, various receivers have been studied according to a method of approximating an inverse matrix and a method of reducing complexity by learning scarcity. Hereinafter, in an electronic device and a method according to the embodiments of the present disclosure, it will be illustrated based on the MMSE receiver among receivers. For example, the MMSE receiver may include an MMSE interference rejection combining (IRC) (MMSE IRC) receiver and an MMSE receiver (hereinafter referred to as a whitening MMSE receiver) including whitening. However, the embodiment of the present disclosure is not limited thereto, and it may be understood that the present disclosure includes substantially the same receiver.

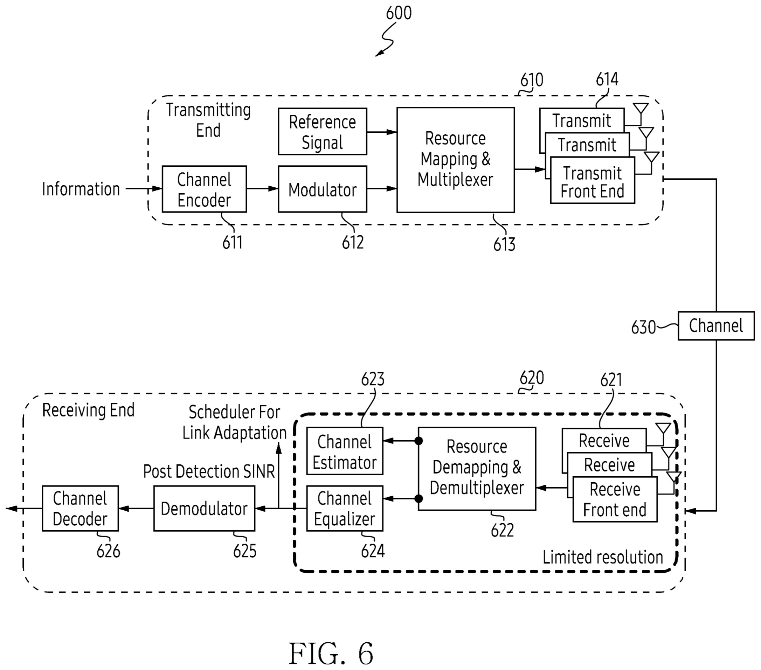

FIG. 6 illustrates an example of a transmitting end and a receiving end of multiple input multiple output (MIMO).

Referring to FIG. 6, a communication system 600 (e.g., a wired and wireless communication system, or a broadcasting system) for supporting MIMO may include a transmitting end 610 and a receiving end 620 as a portion of an electronic device or a node using a channel 630 (e.g., a wired or wireless channel, or a wired/wireless channel combined). Hereinafter, in the present disclosure, the transmitting end 610 and the receiving end 620 may be referred to as a transmitter or a receiver, respectively.

According to an embodiment, the transmitting end 610 and the receiving end 620 may be included in another electronic device according to a link formed between communication nodes. For example, the transmitting end 610 may be a base station 110 and the receiving end 620 may be a terminal 120. Also, the receiving end 620 may be the base station 110, and the transmitting end 610 may be the terminal 120. For example, the transmitting end 610 or the receiving end 620 may be included in the base station 110 including a digital unit (DU) (e.g., the DU 210 of FIG. 2) and a radio unit (RU) (e.g., the RU 220 of FIG. 2). For example, at least a portion of signal processing operations of the transmitting end 610 or the receiving end 620 may be performed in the DU of the base station 110.

Hereinafter, it is described that a subject of transmitting a signal is described as the transmitting end 610, and a subject of receiving a signal is described as the receiving end 620, but it is only a functional expression to explain a signal processing process and is not interpreted as limiting a specific embodiment. For convenience of explanation, FIG. 6 illustrates the communication system 600 in which the transmitting end 610 and the receiving end 620 are implemented as different electronic devices or nodes. However, the transmitting end 610 and the receiving end 620 may be included in one electronic device.

According to an embodiment, the transmitting end 610 may perform conversion between a baseband signal and a bitstream according to a physical layer standard of a system. For example, the transmitting end 610 may generate a codeword by encoding information bits based on at least one channel encoder 611. The transmitting end 610 may generate complex-valued symbols through a modulator 612 based on the encoded codeword. The transmitting end 610 may process a reference signal known at the transmitting end 610 together with the complex-valued symbols through a resource mapping and multiplexer 613. For example, the transmitting end 610 may perform time/space/frequency resource mapping of the complex-valued symbols and the reference signal, and may multiplex them in orthogonal frequency division multiple access (OFDM)/discrete Fourier transform-spread-OFDM (DFT-s-OFDM)/code division multiple access (CDMA) method. The transmitting end 610 may transmit a signal processed through a transmit front end 614. For example, the transmitting end 610 may up-convert from a baseband signal to a radio frequency (RF) signal, and then transmit the RF signal through an antenna. As the transmitted RF signal passes through the channel 630, it may be affected by damage or loss of gain due to a background noise, an interference, fading, and the like.

According to an embodiment, the receiving end 620 may receive the RF signal that has passed through the channel 630 by being transmitted from the transmitting end 610, through a receive front end 621. For example, the RF signal may be received through an antenna after passing through the channel 630. The RF signal may be down-converted to a baseband signal. The receiving end 620 may process the baseband signal through a resource demapping and demultiplexer 622. For example, the receiving end 620 may classified the baseband signal into a reference signal and a data signal by demultiplexing and demapping the baseband signal. The baseband signal may be referred to as a reception signal in which the receiving end 620 has received. The reference signal and the data signal identified by demultiplexing and defaming from the reception signal may be referred to as a reception reference signal and a reception data signal, respectively. The receiving end 620 may perform channel estimation the channel 630 from the reference signal through a channel estimator 623. The receiving end 620 may perform equalization through a channel equalizer 624 based on information on the channel estimation and the data signal. The receiving end 620 may obtain a post detection signal to interference plus noise ratio (pSINR) of the reception signal. The pSINR may be used for link adaptation in a scheduler (not illustrated) of the receiving end 620. The receiving end 620 may estimate or restore the transmitted bit stream by demodulating and decoding through a demodulator 625 and a channel decoder 626.

Referring to the above description, in a process in which the receiving end 620 inversely separates a signal for each transmission layer from the reception signal, according to a limited resolution of the receiving end 620, an ill-posed problem (or an ill-conditioned problem) in which an appropriate inverse matrix value may not be calculated may occur. Furthermore, according to the limited resolution of the receiving end 620, in a relatively high signal to noise ratio (SNR) region, a maximum value of the pSINR may be limited, and the pSINR may be overestimated or underestimated.

Hereinafter, the following mathematical symbols are used in a process of describing the present invention in detail.

- A calligraphic character (e.g., $\mathcal{A}$) is used to indicate a set.
- In the present disclosure, unless otherwise stated, it is assumed that an index of a first element of a set, a sequence, and a vector starts from 0 (zero-based numbering).

- Symbols $\mathbb{N}$, $\mathbb{Z}$, and $\mathbb{R}$ are used to represent a set of natural numbers, a set of integers, and a set of real numbers, respectively.

- For a non-negative integer $n$, $\mathbb{Z}_n$ indicates a set of consecutive $n$ integers from 0 to $n$ - 1. In other words, it's $\mathbf{z_n = \{0, 1, ..., n - 1\}}$,
- A boldface lowercase letter (e.g., **a**) is used to indicate a vector, and a boldface uppercase letter (e.g., **A**) is used to indicate a matrix. In a case of a vector, unless otherwise stated, it indicates a column vector. Herein, a vector $a_l$ indicates a $l$-th column vector of the matrix **A**.
- For the vector **a** and the matrix **A**, $a^H$ and $\mathbf{A}^H$ indicate complex transposes, respectively.

In a multiple input multiple output system including a massive MIMO system, the receiver may include a linear receiver such as a minimum mean square error (MMSE) receiver and a successive interference cancellation (SIC) receiver, or nonlinear receivers that expect maximum likelihood (ML) performance by an iterative equalization and decoding method. In the massive multiple input multiple output system, various receivers such as a receiver according to a method of approximating an inverse matrix or reducing complexity by learning scarcity have been studied.

In the present disclosure, a widely used MMSE receiver will be described as an example in consideration of a trade-off in complexity and performance. For example, the MMSE receiver may include an MMSE-interference rejection combining (IRC) (MMSE-IRC) that considers another cell interference and an MMSE receiver that includes whitening (whiting+MMSE). Hereinafter, the present disclosure is described based on the MMSE-IRC receiver. However, an embodiment of the present disclosure is not limited thereto, and the embodiment of the present disclosure may be applied to structures of various receivers.

Before explaining an error (e.g., a maximum value limitation and an over or underestimation) of the pSINR according to the limited resolution of the receiver, a method of identifying the pSINR from the reception signal is as follows.

For example, at a specific time and frequency, a reception signal received through at least one reception antennas $N_{rx}$ may be indicated as follows.

【Equation 1】

$$\mathbf{y}(k) = \mathbf{H}(k)\mathbf{x}(k) + \mathbf{i}(k) + \mathbf{n}(k)$$

The k may indicate a subcarrier index, when the number of at least one transmission layer is $N_{layer}$, the $\mathbf{x}(k)$ may indicate a transmission vector having a size of ($N_{layer} \times 1$), in which average power ( $\sigma_x^2 = 1$ ) is 1, the n(k) may indicate a white Gaussian noise vector having a size of ($N_{rx} \times 1$), the $\mathbf{i}(k)$ may indicate an interference vector having a size of ($N_{rx} \times 1$), the y(k) may indicate a reception vector having a size of ($N_{rx} \times 1$), and the $\mathbf{H}(k)$ may indicate a channel matrix having a size of $N_{rx} \times N_{layer}$. When a channel vector of a l-th layer is $\mathbf{b}_l$, the channel matrix having a size of $N_{rx} \times N_{layer}$ may be indicated as $\mathbf{H}(k) = [\mathbf{h_0}\ \mathbf{h_1} \cdots \mathbf{h}_{N_{layer-1}}]$. The transmission vector may indicate a vector of a transmission signal. The white Gaussian noise vector may indicate a vector with respect to a white Gaussian noise of a reception signal. The interference vector may indicate a vector with respect to interference of the reception signal. The channel matrix may indicate a matrix with respect to the channel.

In this case, a weight vector of the MMSE-IRC receiver may be indicated as follows. The weight vector may be referred to as a weight or an MMSE weight.

【Equation 2】

$$\mathbf{W}(k) = \left(\tilde{\mathbf{H}}(k)\tilde{\mathbf{H}}(k)^H + \mathbf{R_{nn}}\right)^{-1}\tilde{\mathbf{H}}(k) = \left(\tilde{\mathbf{H}}(k)\mathbf{R_{nn}^{-1}}\tilde{\mathbf{H}}(k)^H + \mathbf{I}\right)^{-1}\tilde{\mathbf{H}}(k)\mathbf{R_{nn}^{-1}}$$

The $\mathbf{W}(k)$ may indicate a weight vector, the $\tilde{\mathbf{H}}(k)$ may indicate an estimated channel matrix, the I may indicate an identity matrix having a size of ($N_{layer} \times N_{layer}$), and the $\mathbf{R_{nn}}$ may indicate a signal to interference plus noise covariance matrix. The $\mathbf{R_{nn}}$ may be referred to as a noise and interference covariance matrix. The $\mathbf{R_{nn}}$ may be obtained as follows.

【Equation 3】

$$\mathbf{R_{nn}} = \mathrm{E}\{\mathbf{i}(k)\mathbf{i}(k)^H + \mathbf{n}(k)\mathbf{n}(k)^H\} \approx \frac{1}{N}\sum_{L}^{N}\left(\mathbf{y}(k) - \tilde{\mathbf{H}}(k)\mathbf{x}(k)\right)\left(\mathbf{y}(k) - \tilde{\mathbf{H}}(k)\mathbf{x}(k)\right)^H$$

The x(k) may indicate a transmission vector having a size of ($N_{layer} \times 1$), in which average power ( $\sigma_x^2 = 1$ ) is 1, the n(k) may indicate a white Gaussian noise having a size of ($N_{rx} \times 1$), the $\mathbf{i}(k)$ may indicate an interference vector having a size of ($N_{rx} \times 1$), the y(k) may indicate a reception vector having a size of ($N_{rx} \times 1$), the $\tilde{\mathbf{H}}(k)$ may indicate an estimated channel matrix, the E may indicate a covariance operation with respect to a matrix, and the N may indicate the number of samples for the operation. In other words, the noise and interference covariance matrix can be obtained through an average with respect to the channel $\tilde{\mathbf{H}}$ estimated from a reference symbol that knows the transmission signal, and the number of samples N. The MMSE-IRC equalized reception signal is as follows.

【Equation 4】

$$\hat{x}_{MMSE}(k) = W(k)^H y(k) = W(k)^H \big(H(k)x(k) + i(k) + n(k)\big)$$

The $\hat{x}_{MMSE}(k)$ may indicate an equalized reception vector, the $W(k)$ may indicate a weight vector, the $x(k)$ may indicate a transmission vector having a size of ($N_{layer} \times 1$), in which average power is 1, the $n(k)$ may indicate a white Gaussian noise having a size of ($N_{rx} \times 1$), the $i(k)$ may indicate an interference vector having a size of ($N_{rx} \times 1$), the $y(k)$ may indicate a reception vector having a size of ($N_{rx} \times 1$), and the $\tilde{H}(k)$ may indicate an estimated channel matrix.

When a gain of the $l$-th reception signal is $\beta_l(k) = w(k)_l^H h(k)_l \approx w(k)_l^H \tilde{h}(k)_l$ , a post detection SINR (pSINR) for each subcarrier is as follows.

【Equation 5】

$$pSINR = \beta_l(k) \Big/ {1 - \beta_l(k)}$$

The pSINR may indicate a pSINR in a case that a waveform of a signal is CP-OFDM. For example, in a case of DFT-s-OFDM, which is a single carrier system, a gain of a reception signal may be indicated as an average value of $\frac{1}{K}\sum_{k=0}^{K-1}\beta_l(k)$ . Based on the average reception signal gain, the pSINR is as follows.

【Equation 6】

$$pSINR = \beta_l(k) \Big/ {1 - \frac{1}{K}\sum_{k=0}^{K-1}\beta_l(k)}$$

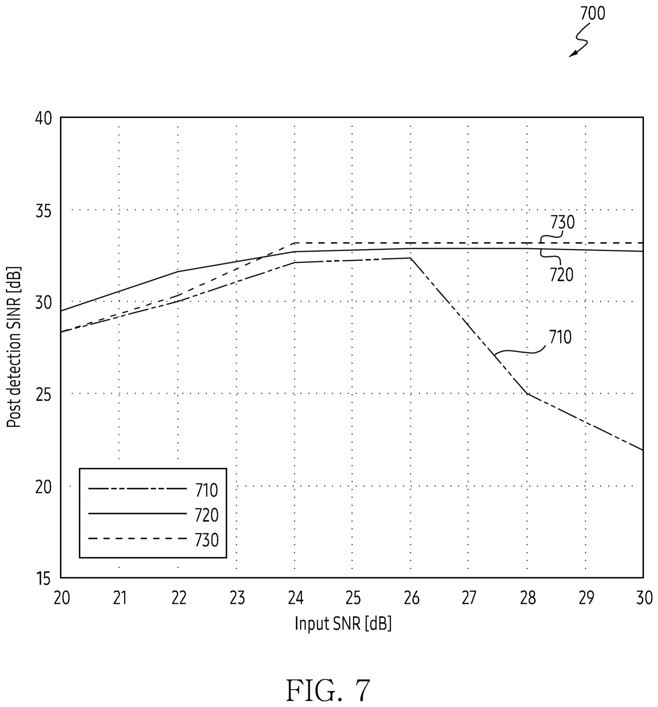

As described above, the pSINR obtained from the reception signal may be used for scheduling or used to identify a log-likelihood ratio (LLR) for decoding of the reception signal. Referring to the equation, the pSINR of the reception signal may be identified based on information on channel estimation and information on noise and interference estimation of the signal. In this case, a maximum value of the pSINR may be limited, overestimated, or underestimated according to a limit of a resolution of the receiver. Specific content related to this will be described in FIG. 7.

FIG. 7 is a graph illustrating an example of a signal to interference plus noise ratio (SINR) according to a resolution of a receiving end.

Referring to FIG. 7, a graph 700 includes a first line 710 indicating an empirical SINR detected based on a channel estimated from a reference symbol that knows a transmission signal, a second line 720 indicating a pSINR based on a CP-OFDM method, and a third line 730 indicating a pSINR based on a DFT-s-OFDM method. A horizontal axis of the graph 700 may indicate an input signal to noise ratio (SNR) (unit: decibel [dB]), and a vertical axis may indicate a signal to interference plus noise ratio (SINR) (unit: decibel [dB]). The SINR may indicate pSINR, which is post detection SINR.

Referring to the graph 700, in the first line 710, a SINR may be reduced in a region (e.g., 26 dB or more) having a relatively high SNR. For example, the first line 710 may have a lower SINR value than the second line 720 and the third line 730 in a high SNR region. For example, in a case that the SNR is 28 dB, the first line 710 may have an SINR of about 25 dB. In addition, in a case that the SNR is 30 dB, the first line 710 may have an SINR of about 22 dB. The first line 710 knows the transmission signal and may indicate the actually detected SINR. In other words, in contrast to the second line 720 and the third line 730 indicating a theoretically calculated value, the SINR value may be reduced in the high SNR region in the first line 710 indicating an actually detected value.

In addition, referring to the graph 700, in a region where the SNR has a value of about 24 dB, the first line 710 may indicate about 32 dB, and the second line 720 and the third line 730 may indicate about 33 dB. Even if the actually detected value indicates 32dB, the 32dB may not be indicated according to resolution performance of a receiver, and thus the actually detected pSINR (the 32dB) may be regarded as 33dB when scheduling or LLR calculating of an electronic device. In other words, the pSINR may be overestimated by about 1 dB above the actual detected value.

Referring to the above description, a problem in which the SINR is detected as a reduced value in the high SNR region and a problem that is overestimated (or underestimated) may be caused by the performance (e.g., the resolution) of the receiver. For example, in a case of a half precision floating point using 16 bits, a reception signal gain $\beta_l(k)$ may be limited by the resolution of the receiver. For example, the 16-bit half precision floating point indicates a decimal point as 10 bits, so the receiver may have a limited resolution of 1/2048. Referring to Table 3 below, it may be seen that the reception signal gain $\beta_l(k)$ is limited according to the resolution limit.

[Table 1]

| $\beta_l(k)$ w/fp16 | post SINR [dB] |
| --- | --- |
| 0.995605469 | 23.55 |
| 0.99609375 | 24.07 |
| 0.996582031 | 24.65 |
| 0.997070313 | 25.32 |
| 0.997558594 | 26.11 |
| 0.998046875 | 27.08 |
| 0.998535156 | 28.34 |
| 0.999023438 | 30.10 |
| 0.999511719 | 33.11 |

Referring to the table, in the receiver using a 16-bit half precision floating point method a resolution (or a gap capable of displaying pSINR) (e.g., a maximum of 3dB interval in the last two rows of the table) of the post detection SINR may be limited. Furthermore, a maximum value of the pSINR may be limited to about 33 dB. Accordingly, in a case that a scheduler of the electronic device including the receiver requires a pSINR of 33dB or more , or a pSINR that is more detailed than 3dB to support a specific modulation and coding scheme (MCS), the required pSINR may not be supported according to a limitation of the resolution. In addition, as the resolution is limited according to a level of the reception signal gain in a specific region, the pSINR may be overestimated or underestimated.

In addition, a range of a normal number based on a positive number is $2^{-14} \sim 65504$, and an reciprocal number may exist within this value. In the high SNR region, as a difference between $\tilde{\mathbf{H}}(k)\tilde{\mathbf{H}}(k)^H$ and $\mathbf{R}_{nn}$ in Equation 2, accuracy may be lower when calculating an inverse matrix (e.g., $(\tilde{\mathbf{H}}(k)\tilde{\mathbf{H}}(k)^H + \mathbf{R}_{nn})^{-1}$). When the actual transmission signal is known and power of the transmission signal is assumed to be 1, quality of the detected signal may be identified by considering a difference between Equation 4 $\hat{\mathbf{x}}_{MMSE}(k)$ and the transmission signal $\mathbf{x}(k)$ as an error. The quality of the actually detected signal may be referred to as the empirical SINR. The empirical SINR may be identified as follows.

【Equation 7】

$$1 \Big/ \frac{1}{N}\sum_{k}^{N}|\mathbf{x}(k) - \hat{\mathbf{x}}_{M.MSE}(k)|^2$$

The $\mathbf{x}(k)$ may indicate a transmission vector having a size of ($N_{layer} \times 1$), in which average power is 1, and the $\hat{\mathbf{x}}_{MMSE}(k)$ may indicate an equalized reception vector.

Referring to FIG. 7, an increase in the pSINR is expected in proportion to an input SNR, but the empirical SINR may be reduced according to an occurrence of an ill-posed problem. For example, in a case that there is no ill-posed problem and there is no channel estimation error, the empirical SINR and a DFT-s-OFDM SINR (or CP-OFDM SINR) may have similar values. However, the empirical SINR in high SNR region (e.g., a SNR region of 26 dB or more) may be reduced as the ill-posed problem occurs according to a resolution limitation of the receiver. Furthermore, the pSINR of DFT-s-OFDM (or CP-OFDM) at input SNR 24dB may be overestimated by 1dB relative to the empirical SINR due to the limit of the resolution.

Referring to FIGS. 6 and 7, an appropriate dynamic range may be required in a process of obtaining an inverse matrix with respect to a weight of an MMSE receiver or an MMSE-IRC receiver in a MIMO system including one or more transceivers. In addition, as the number of antennas and layers supported by the MIMO system increases, the dynamic range required becomes wider. In particular, in a case of using fixed-point operations or minifloats (e.g., 24 bits, 16 bits, or 8 bits) that use a small number of bits while being a floating point, resolution as well as the dynamic range may be limited. For example, in a case of a half-precision floating point using 16 bits, the ill-posed problem may occur due to the limitation of the resolution. In addition, even if it is not the ill-posed problem, a maximum value of a post detection signal to interference plus noise ratio (pSINR) and the resolution in the high SNR region may be limited. In addition, in the actual environment, pSINR, which means quality after the signal detection, may be overestimated or underestimated due to a channel estimation error and an estimation error of a noise and an interference.

Hereinafter, a device and a method according to an embodiment of the present disclosure may configure a stable transmission/reception system with the limited resolution. A method performed in a communication and broadcasting system based on the embodiment of the present disclosure may include an operation in which an information bit is encoded with a forward error correction (FEC) such as a low density parity check (LDPC) or a turbo code, and then a modulated signal is received through a multiple input multiple output system, such as a Quadrature Amplitude Modulation (QAM) technique. In inversely separating the signal for each transmission layer from the reception signal, the device and the method according to the embodiment of the present disclosure may perform regularization before obtaining an inverse function with respect to a weight of the receiver to solve a difference between channel estimation and noise and interference estimation, or an ill-posed problem generated from the limited number of bits. In addition, the device and the method according to the embodiment of the present disclosure may compensate for the pSINR used in the scheduler performing link adaptation to have an appropriate range. In addition, the device and the method according to the embodiment of the present disclosure may identify an LLR before decoding based on at least one of a bit-width of a decoder, modulation and coding scheme (MCS), or a regularized LLR corresponding to a specific bit (e.g., a most significant bit (MSB) and a least significant bit (LSB) that will have the smallest LLR) of the MCS, or a reverse compensation value for the pSINR.

When the ill-posed problem occurs, regularization methods using Tikhonov regularization that increases a diagonal component, or a small eigenvalue truncation method based on eigenvalue decomposition, may be used. In general, diagonal loading to increase the diagonal component may be considered as a method to reduce sample mean-based covariance estimation error. The diagonal loading may include a configuration (e.g., a scaled identity matrix (e.g., k* I, the k is a real number), or a diagonal matrix with respect to the scaled noise and interference covariance matrix (e.g., diag($\mathbf{R_{nn}}$)* $\alpha$, the $\alpha$ may consist of a column vector having different values for each row of the diagonal matrix) for correcting the diagonal component with respect to the noise and interference covariance matrix.

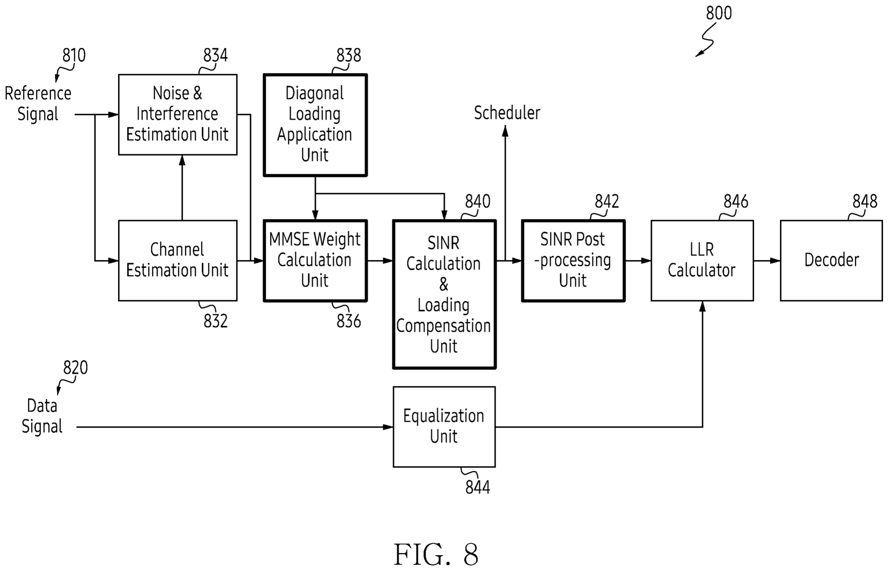

Hereinafter, in the present disclosure, an additional diagonal loading may be applied in consideration of a difference between the noise and interference covariance matrix and a channel covariance matrix and an effect of reducing the resolution in the high SNR region illustrated in Table 3. For example, in a case of an MMSE-IRC receiver of FIG. 8, the device and the method according to the embodiment of the present disclosure may identify an MMSE weight of the MMSE IRC receiver through an estimation error of the covariance matrix of the noise and interference and one diagonal loading identified based on a resolution (e.g., the difference between the noise and interference covariance matrix and the channel covariance matrix, and the effect of reducing the resolution in the high SNR in Table 3) of the MMSE IRC receiver.

FIG. 8 illustrates an example of a receiving end for obtaining a compensated SINR based on a resolution. A receiving end 800 of FIG. 8 may be included in the receiving end 620 of FIG. 6. The receiving end 800 of FIG. 8 may be included in a device of the base station 110 or the terminal 120 of FIG. 1. For example, the device of the base station 110 may include a DU (the DU 210 of FIG. 2). The resolution may indicate a resolution of the receiving end 800 of FIG. 8. The SINR may indicate a SINR after signal detection (pSINR). The receiving end 800 of FIG. 8 may also be referred to as a receiver. The receiver may include an MMSE-IRC receiver.

Referring to FIG. 8, the receiving end 800 may obtain a signal transmitted from another electronic device (not illustrated). For example, in a case that an electronic device including the receiving end 800 is the base station 110, an RU (e.g., the RU 220 of FIG. 2) of the base station 110 may receive the signal transmitted from the other electronic device. For example, the DU of the base station 110 may obtain the signal from the RU. For example, the transmitted signal may include a signal on a physical uplink shared channel (PUSCH). The signal may be referred to as a reception signal. The reception signal may include a reference signal 810 (or a reception reference signal) and a data signal 820 (or a reception data signal).

According to an embodiment, the receiving end 800 may include a channel estimation unit 832, a noise and interference estimation unit 834, an MMSE weight calculation unit 836, a diagonal loading application unit 838, an SINR calculation and loading compensation unit 840, an SINR post-processing unit 842, an equalization unit 844, an LLR calculator 846, and a decoder 848. According to an embodiment, the electronic device including the receiving end 800 may include a scheduler (not illustrated) that performs link adaptation based on a pSINR identified through the SINR calculation and loading compensation unit 840.

According to an embodiment, the channel estimation unit 832 may perform channel estimation based on the reception reference signal 810. For example, the channel estimation unit 832 may obtain information on the channel estimation based on the reception reference signal 810. For example, the information on the channel estimation may include a channel estimation matrix $\tilde{\mathbf{H}}(k)$.

According to an embodiment, the noise and interference estimation unit 834 may estimate noise and interference based on the reception reference signal 810 and the information on the channel estimation. For example, the noise and interference estimation unit 834 may obtain information on the noise and interference estimation based on the reception reference signal 810 and the information on the channel estimation. The information on the noise and interference estimation may include a covariance matrix $\mathbf{R_{nn}}$ with respect to the noise and the interference.

For example, the covariance matrix $\mathbf{R_{nn}}$ with respect to the noise and the interference may be identified based on the information on the channel estimation and an average of the reception reference signal 810, as illustrated in Equation 3 described above.

According to an embodiment, the MMSE weight calculation unit 836 may identify an MMSE weight based on a diagonal loading, the information on the identified channel estimation, and the information on the noise and interference estimation. For example, the MMSE weight calculation unit 836 may identify the MMSE weight of the receiving end 800 based on the diagonal loading obtained from the diagonal loading application unit 838, the channel estimation information obtained from the channel estimation unit 832, and the noise and interference estimation information obtained from the noise and interference estimation unit 834. According to an embodiment, the diagonal loading may be identified based on an estimation error of the covariance matrix of the noise and the interference, and a resolution of the receiving end 800. For example, the estimation error of the covariance matrix of the noise and the interference may be identified based on the number of samples, a channel estimation error, and a relationship between a correction value of a self-antenna and a correction value of another antenna. For example, the resolution of the receiving end 800 may be identified based on a difference between the noise and interference covariance matrix and a channel covariance matrix (or noise and interference power and channel power), and the number of bits that the receiver may represent.

According to an embodiment, the SINR calculation and loading compensation unit 840 may identify an SINR based on information on the diagonal loading and the MMSE weight. For example, the SINR calculation and loading compensation unit 840 may identify the SINR based on the MMSE weight. The SINR may include a post detection signal to interference plus noise ratio (pSINR). For example, the SINR calculation and loading compensation unit 840 may identify an inverse-compensated pSINR based on the information on the diagonal loading received from the diagonal loading application unit 838 with respect to the identified pSINR. For example, the inverse compensation may be performed based on an average of a ratio between the diagonal loading and the noise and the interference (or noise and interference power), a ratio of an average of the diagonal loading and an average between the noise and the interference (or the noise and interference power), and a weight sum of a difference between the diagonal loading and the noise and the interference (or the noise and interference power).

According to an embodiment, the inverse-compensated pSINR may be used for the link adaptation in the scheduler (not illustrated). For example, the inverse-compensated pSINR may be applied to an adaptive modulation technique or used for scheduling for multi-layer transmission with respect to a single user or multi-users.

According to an embodiment, the SINR post-processing unit 842 may perform post-processing on the inverse-compensated pSINR. For example, the SINR post-processing unit 8420 may limit a maximum value of the pSINR or perform scaling of the pSINR. For example, the post-processing may include the limitation of the maximum value or the scaling of the pSINR, based on at least one of a bit-width of a decoder, modulation and coding scheme (MCS), or a regularized LLR corresponding to a bit that will have the smallest LLR of the MCS. For example, the bit that will have the smallest LLR of the MCS may be a most significant bit or a least significant bit of M-ary QAM. According to an embodiment, in a case that the inverse compensation corresponding to the diagonal loading is performed, the post-processing may include the limitation of the maximum value or the scaling of the pSINR, based on an inverse compensation value performed on the identified pSINR.

According to an embodiment, the LLR calculator 846 may calculate an LLR based on the post-processed pSINR and the equalized data signal. For example, the equalization unit 844 may perform equalization with respect to the received data signal 820. The LLR calculation calculator 846 may calculate an LLR for decoding based on the equalized data signal and the post-processed pSINR. For example, the LLR may be identified as follows based on the pSINR.

【Equation 8】

$$\text{LLR}_l(bit_b) = \ln\left(\frac{\text{P}(\text{bit}_b = 0 \mid \hat{x}_l)}{\text{P}(\text{bit}_b = 1 \mid \hat{x}_l)}\right) \approx pSINR_l\left(\min_{a\in\mathcal{A}_{b,l}^1}\left|\frac{\hat{x}_l}{\beta_l} - a\right|^2 - \min_{a\in\mathcal{A}_{b,l}^0}\left|\frac{\hat{x}_l}{\beta_l} - a\right|^2\right)$$

The *LLR_l* may indicate an l-th log-likelihood ratio, the $A_{b,l}^1$ may indicate a constellation set in which a b-th bit is 1 among constellations that may occur according to a modulation technique, the $A_{b,l}^0$ may indicate a constellation set in which the b-th bit is 0 among the constellations that may occur according to the modulation technique, the $\hat{x}_l$ may indicate an equalized l-th reception signal, and the $\beta_l$ may indicate an l-th reception gain. For example, in a case of an M-ary quadrature amplitude modulation (QAM) scheme, a log-likelihood ratio of bit information corresponding to **b = 0** and **log₂ M**

**- 1** may be identified, respectively. In this case, a size of the $\Lambda_{b,l}^{0}$ is $M/2$. **In** addition, in the M-ary QAM, an LLR value corresponding to the **log$_2$ M - 1**, which is a most significant information bit (or a most significant bit) or a least significant information bit (or a least significant bit) may have a smallest range. The most significant bit or the least significant bit may be identified according to a standard for mapping bit information to QAM. That is, a regularized log-likelihood ratio of the LLR value corresponding to the most significant information bit **log$_2$ M - 1** may have a limited range and may be scaled according to the pSINR. Estimation accuracy of the pSINR affects link performance, especially an effect of an pSINR overestimated in a higher-order modulation scheme may increase. To reduce the effect and accurately calculate, a device and a method according to an embodiment of the present disclosure may perform the post-processing on the pSINR through the SINR post-processing unit 842, and then perform the scaling to the regularized log-likelihood ratio.

According to an embodiment, the decoder 848 may perform decoding with respect to the reception signal based on the LLR identified through the LLR calculation unit 846.

Referring to the above description, in inversely separating a signal for each transmission layer from the reception signal, the device and the method according to the embodiment of the present disclosure may solve an ill-posed problem due to the limited resolution generated by the channel estimation error, the estimation error of the noise and the interference, and the limited number of bits of the receiver through regularization. In addition, the device and the method according to the embodiment of the present disclosure may adjust the resolution of the receiver for the pSINR. The pSINR may be limited due to this regularization, but the device and the method according to the embodiment of the present disclosure may solve the limitation of the maximum value of the SINR represented in Table 3 and solve a resolution problem in a high SNR region, by inverse-compensating the pSINR calculated with respect to a known diagonal loading component, and transmitting it to the scheduler. Accordingly, the device and the method according to the embodiment of the present disclosure may use a link adaptation technique such as a high-dimensional modulation/demodulation technique and multi-layer allocation. Furthermore, in calculating a log-likelihood ratio (LLR) before decoding, the device and the method according to the embodiment of the present disclosure may perform the post-processing on the pSINR based on at least one of the bit-width of the channel decoder, the modulation and coding scheme (MCS), or the regularized LLR corresponding to a bit (e.g., the most significant bit (MSB) or the least significant bit (LSB)) that will have the smallest LLR of the MCS. Accordingly, the device and the method according to the embodiment of the present disclosure may prevent performance degradation due to overestimation of the pSINR due to the channel estimation or the estimation error of the noise and the interference, and secure stable link performance. For example, performance in the maximum MCS in which a decoder is supportable may be improved.

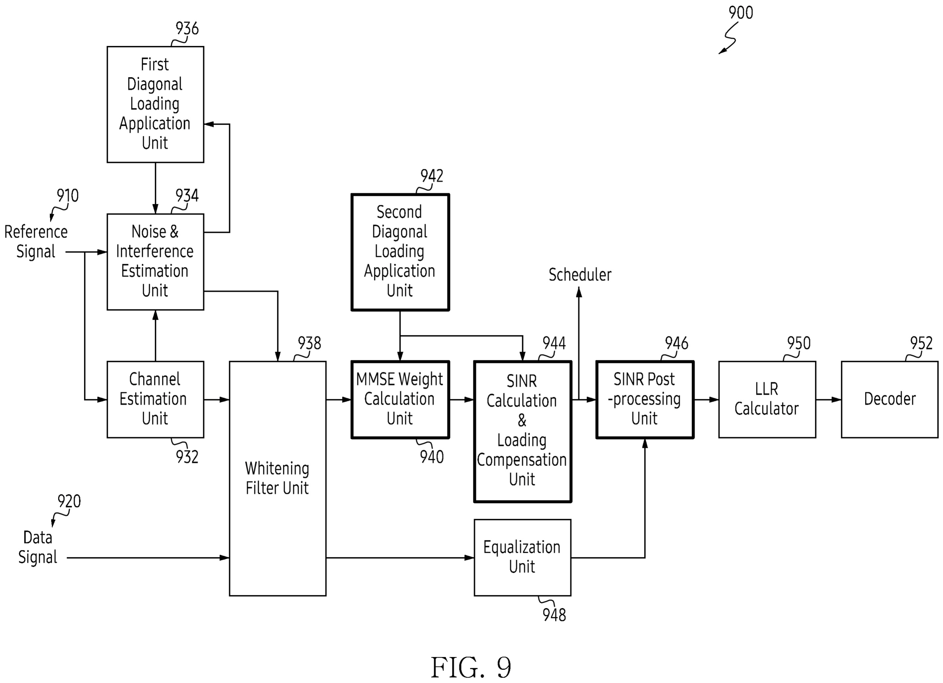

In a case of a whitening MMSE receiver of FIG. 9, in estimating the noise and the interference, the device and the method according to the embodiment of the present disclosure may consider a first diagonal loading for reducing a sample mean-based covariance estimation error. Additionally, in identifying the MMSE weight, the device and the method according to the embodiment of the present disclosure may consider a second diagonal loading based on a resolution (e.g., the difference between the noise and interference covariance matrix and the channel covariance matrix, and the effect of reducing the resolution in the high SNR in Table 3) of the whitening MMSE receiver.

FIG. 9 illustrates an example of a receiving end for obtaining a compensated SINR based on a resolution. A receiving end 900 of FIG. 9 may be included in the receiving end 620 of FIG. 6. The receiving end 900 of FIG. 9 may be included in the device of the base station 110 or the terminal 120 of FIG. 1. For example, the device of the base station 110 may include a DU (the DU 210 of FIG. 2). The resolution may indicate a resolution of the receiving end 900 of FIG. 9. The SINR may indicate a SINR after signal detection (pSINR). The receiving end 900 of FIG. 9 may be referred to as a receiver. The receiver may include a whitening MMSE receiver.

Referring to FIG. 9, the receiving end 900 may receive a signal transmitted from another electronic device (not illustrated). For example, in a case that an electronic device including the receiving end 900 is the base station 110, an RU (e.g., the RU 220 of FIG. 2) of the base station 110 may receive the signal transmitted from the other electronic device. For example, the DU of the base station 110 may obtain the signal from the RU. For example, the transmitted signal may include a signal on a physical uplink shared channel (PUSCH). The signal may be referred to as a reception signal. The reception signal may include a reference signal 910 (or a reception reference signal) and a data signal 920 (or a reception data signal).

According to an embodiment, the receiving end 900 may include a channel estimation unit 932, a noise and interference estimation unit 934, a first diagonal loading application unit 936, a whitening filter unit 938, an MMSE weight calculation unit 940, a second diagonal loading application unit 942, an SINR calculation and loading compensation unit 944, an SINR post-processing unit 946, an equalization unit 948, an LLR calculator 950, and a decoder 952. According to an embodiment, the electronic device including the receiving end 900 may include a scheduler (not illustrated) that performs link adaptation based on a pSINR identified through the SINR calculation and loading compensation unit 944.

According to an embodiment, the channel estimation unit 932 may perform channel estimation based on the reception reference signal 910. For example, the channel estimation unit 932 may obtain information on the channel estimation based on the reception reference signal 910. For example, the information on the channel estimation may

include a matrix $\tilde{\mathbf{H}}(k)$.

According to an embodiment, the noise and interference estimation unit 934 may estimate a noise and an interference based on a first diagonal loading, the reception reference signal 810, and the information on the channel estimation. For example, the noise and interference estimation unit 934 may obtain information on noise and interference estimation based on the first diagonal loading, the reception reference signal 910, and the channel estimation information obtained from the first diagonal loading application unit 936. The information on the noise and interference estimation may include a covariance matrix $\mathbf{R}_{nn}$ with respect to the noise and the interference. For example, the covariance matrix $\mathbf{R}_{nn}$ with respect to the noise and the interference may be identified based on the information on the channel estimation and an average of the reception reference signal 910 as illustrated in Equation 3 described above. For example, the first diagonal loading may be identified based on an estimation error of the covariance matrix of the noise and the interference. For example, the estimation error of the covariance matrix of the noise and the interference may be identified based on at least one of the number of samples, a channel estimation error, or a relationship between a correction value of a self-antenna and a correction value of another antenna.

According to an embodiment, the whitening filter unit 938 may perform filtering on the information on the channel estimation, the information on the noise and interference estimation, and the reception data signal 920. The filtering may include filtering based on a whitening filter or a whitening matrix.

According to an embodiment, the MMSE weight calculation unit 940 may identify an MMSE weight based on a second diagonal loading, the filtered information on the channel estimation, and the filtered information on the noise and interference estimation. For example, the MMSE weight calculation unit 940 may identify the MMSE weight of the receiving end 900 based on the second diagonal loading obtained from the second diagonal loading application unit 942 and the channel estimation information obtained from the whitening filter unit 938, and the noise and interference estimation information. According to an embodiment, the second diagonal loading may be identified based on a resolution of the receiving end 900. For example, the resolution of the receiving end 900 may be identified based on a difference between the noise and interference covariance matrix and a channel covariance matrix (or noise and interference power and channel power), and the number of bits that the receiver may represent.

According to an embodiment, the SINR calculation and loading compensation unit 944 may identify an SINR based on information on the diagonal loading and the MMSE weight. For example, the SINR calculation and loading compensation unit 944 may identify the SINR based on the MMSE weight. The SINR may include a post detection signal to interference plus noise ratio (pSINR). For example, the SINR calculation and loading compensation unit 944 may identify an inverse-compensated pSINR based on the information on the second diagonal loading received from the second diagonal loading application unit 942 with respect to the identified pSINR. For example, the inverse compensation may be performed based on an average of a ratio between the second diagonal loading and the noise and the interference (or noise and interference power), a ratio of an average of the second diagonal loading and an average between the noise and the interference (or the noise and interference power), and a weight sum of a difference between the second diagonal loading and the noise and the interference (or the noise and interference power).

According to an embodiment, the inverse-compensated pSINR may be used for the link adaptation in the scheduler (not illustrated). For example, the inverse-compensated pSINR may be applied to an adaptive modulation technique or used for scheduling for multi-layer transmission with respect to a single user or multi-users.

According to an embodiment, the SINR post-processing unit 946 may perform post-processing on the inverse-compensated pSINR. For example, the SINR post-processing unit 946 may limit a maximum value of the pSINR or perform scaling of the pSINR. For example, the post-processing may include the limitation of the maximum value or the scaling of the pSINR, based on at least one of a bit-width of the decoder 925, modulation and coding scheme (MCS), or a regularized LLR corresponding to a bit (e.g., a most significant bit (MSB) or a least significant bit (LSB)) that will have the smallest LLR of the MCS. For example, the bit that will have the smallest LLR of the MCS may be a most significant bit or a least significant bit of M-ary QAM. According to an embodiment, in a case that the inverse compensation corresponding to the second diagonal loading is performed, the post-processing may include limitation of the maximum value or the scaling of the pSINR, based on the inverse compensation value performed on the identified pSINR.

According to an embodiment, the LLR calculator 950 may calculate an LLR based on the post-processed pSINR and the equalized data signal. For example, the equalization unit 948 may perform equalization with respect to the reception data signal 920 to which whitening filtering is applied. The LLR calculator 950 may calculate an LLR for decoding based on the equalized data signal and the post-processed pSINR.

According to an embodiment, the decoder 952 may perform decoding with respect to the reception signal based on the LLR identified through the LLR calculator 950.

Referring to FIGS. 8 and 9, in a case that the number of reception antennas is sufficiently larger than the number of transmission layers, in the device and the method according to an embodiment of the present disclosure, two inverse matrix operations may be considered in a process of obtaining an inverse matrix through the noise and interference covariance matrix $\mathbf{R}_{nn}$ or a decomposition matrix of the noise and interference covariance matrix, and in a process of obtaining the MMSE weight, as in Equation 2. Therefore, in the device and the method according to the embodiment of the present disclosure, at least one diagonal loading may be considered in decoding the reception signal.

An additional diagonal loading (e.g., the diagonal loading of FIG. 8 or the second diagonal loading of FIG. 9) according to the embodiment of the present disclosure may act as a noise or an interference, thereby acting as a limitation on the pSINR. To solve this problem, the device and the method according to the embodiment of the present disclosure may perform inverse compensation on the pSINR according to a noise and interference ratio to the additional diagonal loading, and thus recover (or compensate) with the expected pSINR. According to an embodiment, the first diagonal loading may be replaced with a scaled identity matrix instead of the identity matrix in Equation 2 for calculating the MMSE weight. According to an embodiment, the first diagonal loading may be considered as an offset with respect to a denominator of Equation 5 together with the second diagonal loading. However, in a case that the pSINR is restricted and the resolution is low as illustrated in Table 3, the inverse compensation may be omitted. The pSINR limitaion as illustrated in Table 3 in a high SNR region occurs according to Equation 5, and the inverse compensation may be performed in consideration of only the second diagonal loading. The inverse-compensated pSINR may be used for scheduling, such as applying an adaptive modulation technique, or multi-layer transmission with respect to a single user or multiple users, by being reported to the scheduler. The inverse-compensated pSINR may be used to calculate a log-likelihood ratio when demodulating the reception signal in addition to the scheduling. As illustrated in Equation 8, a log-likelihood ratio operation may include scaling based on the pSINR with respect to the regularized log-likelihood ratio when approximating through a Max-Log MAP method.

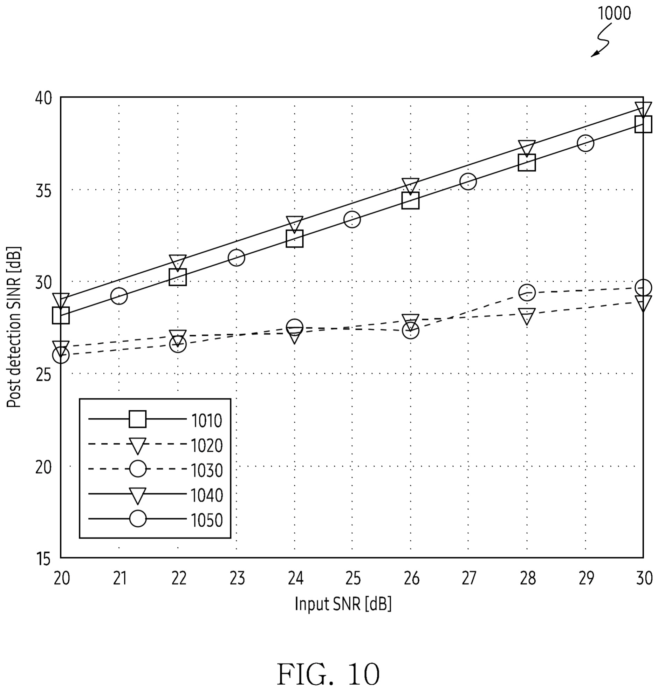

FIG. 10 is a graph illustrating an example of a compensated SINR based on a resolution of a receiving end. The receiving end may include the receiving end 800 of FIG. 8 or the receiving end 900 of FIG. 9. The receiving end may be included in the device (e.g., the DU 210) of the base station 110 or the terminal 120 of FIG. 1. The resolution may indicate a resolution of the receiving end. The SINR may indicate a SINR after signal detection (pSINR). The receiving end may be referred to as a receiver. The receiver may include an MMSE-IRC receiver and a whitening MMSE receiver.

Referring to FIG. 10, a graph 1000 includes a first line 1010 indicating an empirical SINR detected based on a channel estimated from a reference symbol that knows a transmission signal, a second line 1020 indicating a pSINR based on a CP-OFDM method, a third line 1030 indicating a pSINR based on a DFT-s-OFDM method, a fourth line 1040 indicating a pSINR compensated according to a diagonal loading in the CP-OFDM method, and a fifth line 1050 indicating a pSINR compensated according to a diagonal loading in the DFT-s-OFDM method. A horizontal axis of the graph 1000 may indicate an input signal to noise ratio (SNR) (unit: decibel [dB]), and a vertical axis may indicate a signal to interference plus noise ratio (SINR) (unit: decibel [dB]). The SINR may indicate a SINR after signal detection (pSINR).

Referring to the graph 1000, as the SNR of the first line 1010 increases, the SINR of the first line 1010 may increase. Compared with the first line 710 of the graph 700, the first line 1010 may not decrease even in a high SNR region (e.g., a region with an SNR of about 26 dB or more). In general, as the SINR is expected to increase as the SNR increases, referring to the first line 1010, a detection quality of the empirical SINR actually detected may be improved by identifying an MMSE weight through an additional diagonal loading (or the resolution of the receiver).

In the graph 1000, compared with the second line 1020 and the third line 1030, the fourth line 1040 and the fifth line 1050 may indicate a SINR substantially similar to the first line 1010 indicating the empirical SINR actually measured as compensated based on the additional diagonal loading. For example, for the same SNR, an SINR value of the second line 1020 may increase to an SINR value of the fourth line 1040 by being compensated based on the additional diagonal loading. Also, for example, for the same SNR, an SINR value of the third line 1030 may increase to an SINR value of the fifth line 1050 by being compensated based on the additional diagonal loading.

Referring to FIG. 10, a problem in which a maximum value of the pSINR is limited and a problem in which a limitation of a resolution of the pSINR occurs may be improved by compensating according to the additional diagonal loading.

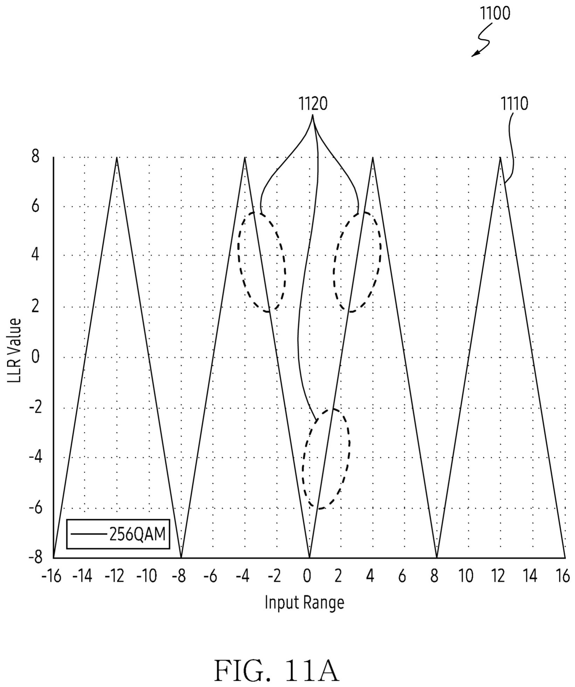

FIG. 11A is a graph illustrating an example of a log-likelihood ratio (LLR) according to a 256 quadrature amplitude modulation (QAM) scheme. The log-likelihood ratio may be calculated by a receiving end. The receiving end may include the receiving end 800 of FIG. 8 or the receiving end 900 of FIG. 9. The receiving end may be included in the device (e.g., the DU 210) of the base station 110 of FIG. 1 or the terminal 120. The resolution may indicate a resolution of the receiving end. The SINR may indicate a SINR after signal detection (pSINR). The receiving end may be referred to as a receiver. The receiver may include an MMSE-IRC receiver and a whitening MMSE receiver.

Referring to FIG. 11A, a graph 1100 may include a line 1110 indicating the log-likelihood ratio according to the 256 QAM modulation scheme. The 256 QAM modulation scheme is exemplary for convenience of description, and an embodiment of the present disclosure is not interpreted as being limited to the 256 QAM modulation scheme. A horizontal axis of the graph 1100 may indicate a range with respect to a real (or in-phase) part of a reception signal on a constellation according to the 256 QAM modulation scheme, and a vertical axis may indicate an LLR value.

Referring to the graph 1100, the line 1110 may indicate that a value of the LLR linearly increases or decreases according to the reception signal (or an input signal). For example, the line 1110 may indicate an LLR of -8 in a case that an input is 0. For example, line 1110 may indicate an LLR of +8 in a case that an input is 4 or -4.

Referring to the graph 1100, a portion 1120 of the line 1110 may indicate a region corresponding to a bit that will have the smallest log-likelihood ratio of MCS. For example, the portion 1120 may indicate a bit portion with a low reception signal level and low reliability. Bits corresponding to the portion 1120 may correspond to bits with a high probability of being incorrectly detected. Accordingly, according to the embodiment of the present disclosure, by performing post-processing the pSINR through a regularized log-likelihood ratio corresponding to the portion 1120, it is possible to adjust an error caused by excessive correction of the LLR.

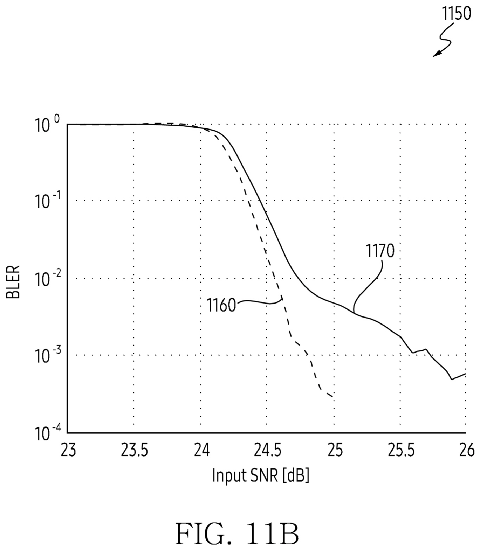

FIG. 11B is a graph illustrating an example of a block error rate (BLER) according to a 256 QAM modulation scheme.

Referring to FIG. 11B, a graph 1150 may include a first line 1160 indicating a block error rate (BLER) of a signal in which SINR post-processing is performed and a second line 1170 indicating a block error rate (BLER) of a signal in which SINR post-processing is not performed in CP-OFDM according to the 256 QAM modulation scheme. The 256 QAM modulation scheme is exemplary for convenience of description, and an embodiment of the present disclosure is not interpreted as being limited to the 256 QAM modulation scheme. In addition, the CP-OFDM multiplexing scheme is exemplary for convenience of explanation, and the embodiment of the present disclosure is not interpreted as being limited to the CP-OFDM multiplexing scheme. A horizontal axis of the graph 1150 may indicate an SNR (unit: decibel[dB]), and a vertical axis may indicate a BLER value.

Referring to the graph 1150, the first line 1160 may have a lower BLER value compared to the second line 1170. For example, in a region of about 24 dB or more, the first line 1160 may have a lower BLER value than the second line 1170. In other words, in a case of the signal in which the SINR post-processing is performed, regardless of the SNR, the block error rate may be lower compared to the signal in which the SINR post-processing is not performed.

Referring to the above description, in a case that there are a channel estimation error and an estimation error of a noise and an interference , and thus a value of calculating the LLR may be miscalculated. Accordingly, a device and a method according to an embodiment of the present disclosure may identify the LLR by correcting it by a necessary level by post-processing (e.g., reflecting the regularized LLR value corresponding to the bit that will have the smallest log-likelihood ratio of the MCS) the SINR in calculating the LLR based on the SINR.

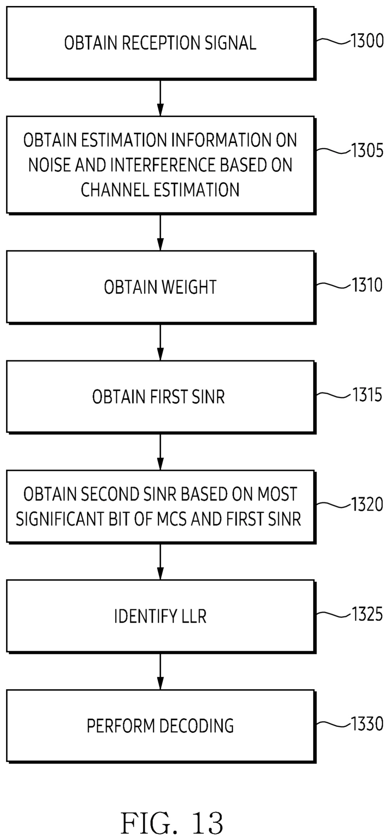

FIGS. 11A and 11B described above may be applied when calculating the LLR based on the SINR, regardless of whether an MMSE weight is identified according to a diagonal loading and the SINR is inverse-compensated accordingly. A specific operation related to this will be described in FIG. 13.

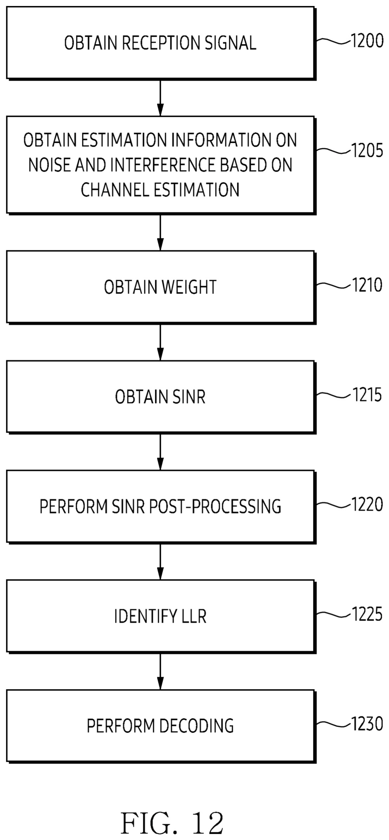

FIG. 12 illustrates an example of an operation flow of an electronic device for obtaining a compensated SINR based on a resolution of a receiving end. The receiving end may include the receiving end 800 of FIG. 8 or the receiving end 900 of FIG. 9. The receiving end may be included in an electronic device (e.g., the device (e.g., the DU 210) of the base station 110 or the terminal 120 of FIG. 1). The resolution may indicate a resolution of the receiving end. The SINR may indicate an SINR after signal detection (pSINR). The receiving end may be referred to as a receiver. The receiver may include an MMSE-IRC receiver and a whitening MMSE receiver.

Referring to FIG. 12, in operation 1200, the electronic device may obtain a reception signal. The signal may be referred to as the reception signal. The reception signal may include a reference signal (or a reception reference signal) and a data signal (or a reception data signal). For example, the reference signal may include a demodulation reference signal (DMRS), a sounding reference signal (SRS), and a channel state information-reference signal (CSI-RS).

In operation 1205, the electronic device may obtain estimation information on a noise and an interference based on channel estimation. For example, the electronic device may estimate a channel based on the reception reference signal. For example, the electronic device may obtain information on noise and interference estimation of the reception signal based on the information on the channel estimation and the reception reference signal. For example, the information on the noise and interference estimation may include a covariance matrix $R_{nn}$ with respect to the noise and the interference. According to an embodiment, the electronic device may obtain the information on the noise and interference estimation based on the reception reference signal, the information on the channel estimation, and a diagonal loading.

In operation 1210, the electronic device may obtain a weight. For example, the electronic device may obtain an MMSE weight of the receiver based on the information on the channel estimation, the information on the noise and interference estimation, and the diagonal loading. The receiver may be included in the electronic device. According to an embodiment, the diagonal loading may be identified based on an estimation error of the covariance matrix of the noise and the interference and a resolution of the receiver. For example, the estimation error of the covariance matrix of the noise and the interference may be identified based on the number of samples, a channel estimation error, and a relationship between a correction value of a self-antenna and a correction value of another antenna. For example, the resolution of the receiver may be identified based on a difference between the noise and interference covariance matrix and a channel covariance matrix (or noise and interference power and channel power), and the number of bits that the receiver may represent. If the diagonal loading is considered in the noise and interference channel estimation, the diagonal loading considered in operation 1210 may be identified based on the resolution of the receiver.

In operation 1215, the electronic device may obtain an SINR. The SINR may indicate a pSINR that is a post detection signal to interference plus noise ratio. According to an embodiment, the electronic device may identify the pSINR based on information on the diagonal loading and the MMSE weight. For example, the electronic device may identify the pSINR based on the MMSE weight. The electronic device may identify the pSINR that is inverse-compensated with respect to the primarily identified pSINR based on the information on the diagonal loading. For example, the inverse compensation may be performed based on an average of a ratio between the diagonal loading and the noise and the interference (or noise and interference power), a ratio of an average of the diagonal loading and an average between the noise and the interference (or the noise and interference power), and a weight sum of a difference between the diagonal loading and the noise and the interference (or the noise and interference power). According to an embodiment, the inverse-compensated pSINR may be used for link adaptation in a scheduler. The scheduler may be included in the electronic device. For example, the inverse-compensated pSINR may be applied to an adaptive modulation technique or used for scheduling multi-layer transmission with respect to a single user or multi-users.

In operation 1220, the electronic device may perform SINR post-processing. For example, the post-processing may limit a maximum value of the inverse compensated pSINR or include scaling of the pSINR. According to an embodiment, the post-processing may include the limitation of the maximum value or the scaling of the pSINR, based on at least one of a bit-width of a decoder included in the receiver of the electronic device, modulation and coding scheme (MCS), or a regularized LLR corresponding to a bit (e.g., a most significant bit (MSB) or a least significant bit (LSB)) that will have the smallest LLR of the MCS. For example, the bit that will have the smallest LLR of the MCS may indicate a most significant bit of M-ary QAM. According to an embodiment, in a case that the inverse compensation corresponding to the diagonal loading is performed, the post-processing may include the limitation of the maximum value or the scaling of the pSINR, based on the inverse compensation value performed on the identified pSINR.

In operation 1225, the electronic device may identify the LLR. For example, the electronic device may calculate the LLR based on the post-processed pSINR and the equalized data signal. For example, the electronic device may perform equalizing of the data signal included in the reception signal. Based on the equalized data signal and the post-processed pSINR, the electronic device may calculate the LLR.

In operation 1230, the electronic device may perform decoding of the reception signal based on the identified LLR.

Although not illustrated in FIG. 12, the electronic device may perform filtering between operation 1205 and operation 1210 according to a structure of the included receiver. For example, the filtering may include whitening filtering based on a whitening filter or a whitening matrix. For example, the electronic device may perform the whitening filtering on the information on the noise and interference estimation and the information on the channel estimation obtained based on the diagonal loading. Thereafter, the electronic device may identify the MMSE weight based on the filtered information on the noise and interference estimation, the filtered information on the channel estimation , and an additional diagonal loading.

FIG. 13 illustrates an example of an operation flow of an electronic device for identifying an LLR based on a modulation and coding scheme (MCS). The receiving end may include the receiving end 620 of FIG. 6. The receiving end may be included in the electronic device (e.g., the device (e.g., the DU 210) of the base station 110, or the terminal 120 of FIG. 1). The resolution may indicate a resolution of the receiving end. The SINR may indicate a SINR after signal detection (pSINR). The receiving end may be referred to as a receiver. The receiver may include an MMSE-IRC receiver and a whitening MMSE receiver.

FIG. 13 illustrates an example of an operation flow in which the electronic device identifies an LLR to perform decoding on a received signal. According to an embodiment, the electronic device may perform post-processing on the identified pSINR to minimize overcorrection of the LLR. In this case, the post-processing of the pSINR may be performed based on MCS in which a decoder of the electronic device is supportable.

Referring to FIG. 13, in operation 1300, the electronic device may obtain a reception signal. For example, in a case of the base station 110, an RU (e.g., the RU 220 of FIG. 2) of the base station 110 may receive a signal that has passed through a channel by being transmitted from an external electronic device. A DU (e.g., the DU 210 of FIG. 2) of the base station 110 may obtain the signal from the RU. The signal may be referred to as the reception signal. The reception signal may include a reference signal (or a reception reference signal) and a data signal (or a reception data signal). For example, the reference signal may include a demodulation reference signal (DMRS), a sounding reference signal (SRS), and a channel state information-reference signal (CSI-RS).

In operation 1305, the electronic device may obtain estimation information on a noise and an interference based on channel estimation. For example, the electronic device may estimate a channel based on the reception reference signal. For example, the electronic device may obtain information on noise and interference estimation of the reception signal based on the information on the channel estimation and the reception reference signal. For example, the information on the noise and interference estimation may include a covariance matrix $R_{nn}$ with respect to the noise and the interference. According to an embodiment, the electronic device may obtain the information on the noise and interference estimation based on the reception reference signal, the information on the channel estimation, and a diagonal loading.

In operation 1310, the electronic device may obtain a weight. For example, the electronic device may obtain an MMSE weight of the receiver based on the information on the channel estimation and the information on the noise and interference estimation. The receiver may be included in the electronic device.

In operation 1315, the electronic device may obtain a first SINR. The first SINR may indicate a pSINR that is a post detection signal to interference plus noise ratio. According to an embodiment, the electronic device may identify the first SINR based on the MMSE weight. For example, the electronic device may identify the first SINR based on the MMSE weight.

In operation 1320, the electronic device may obtain a second SINR based on a most significant bit of the MCS and the first SINR. For example, the electronic device may perform SINR post-processing. For example, the post-processing may limit a maximum value of the first SINR or include scaling of the first SINR. According to an embodiment, the post-processing may include the limitation of the maximum value or the scaling of the pSINR, based on at least one of a bit-width of a decoder included in the receiver of the electronic device, modulation and coding scheme (MCS), or a regularized LLR corresponding to a bit that will have the smallest LLR of the MCS. For example, the bit that will have the smallest LLR of the MCS may be a most significant bit or a least significant bit of M-ary QAM. For example, the second SINR may be obtained based on the post-processing. For example, the second SINR may be referred to as a post-processed pSINR.

In operation 1325, the electronic device may identify the LLR. For example, the electronic device may calculate the LLR based on the post-processed pSINR and the equalized data signal. For example, the electronic device may perform equalizing of the data signal included in the reception signal. Based on the equalized data signal and the post-processed pSINR, the electronic device may calculate the LLR.

In operation 1330, the electronic device may perform decoding of the reception signal based on the identified LLR.

Although not illustrated in FIG. 13, the electronic device may perform filtering between operation 1305 and operation 1310 according to a structure of the included receiver. For example, the filtering may include whitening filtering based on a whitening filter or a whitening matrix. For example, the electronic device may perform the whitening filtering on the information on the noise and interference estimation and the information on the channel estimation obtained based on the diagonal loading. Thereafter, the electronic device may identify the MMSE weight based on the filtered information on the noise and interference estimation, and the filtered information on the channel estimation.

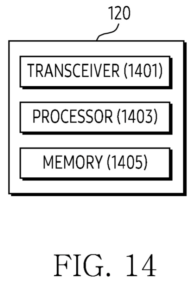

FIG. 14 illustrates an example of a functional configuration of a terminal.

FIG. 14 illustrates the functional configuration of the terminal (e.g., the terminal 120). In receiving a downlink signal of a base station (e.g., the base station 110) or a sidelink signal from another terminal, the terminal 120 may operate as a receiving end.

Referring to FIG. 14, the terminal 120 may include at least one processor 1403, at least one memory 1405, and at least one transceiver 1401. Hereinafter, a component is described in a singular, but implementation of a plurality of components or sub-components is not excluded.

The transceiver 1401 performs functions for transmitting and receiving a signal through a wireless channel. For example, the transceiver 1401 performs a conversion function between a baseband signal and a bit stream according to a physical layer standard of a system. For example, when transmitting data, the transceiver 1401 generates complex-valued symbols by encoding and modulating a transmission bit stream. In addition, when receiving data, the transceiver 1401 restores a reception bit stream by demodulating and decoding the baseband signal. In addition, the transceiver 1401 up-converts a baseband signal into a radio frequency (RF) band signal and then transmits it through an antenna, and down-converts the RF band signal received through the antenna into a baseband signal.

To this end, the transceiver 1401 may include a transmission filter, a reception filter, an amplifier, a mixer, an oscillator, a digital to analog converter (DAC), an analog to digital converter (ADC), and the like. The transceiver 1401 may include a plurality of transmission/reception paths. Furthermore, the transceiver 1401 may include an antenna unit. The transceiver 1401 may include at least one antenna array composed of a plurality of antenna elements. In terms of hardware, the transceiver 1401 may be composed of a digital circuit and an analog circuit (e.g., a radio frequency integrated circuit (RFIC)). Herein, the digital circuit and the analog circuit may be implemented as one package. Also, the transceiver 1401 may include a plurality of RF chains. The transceiver 1401 may perform beamforming. The transceiver 1401 may apply a beamforming weight to a signal to be transmitted/received in order to give a direction according to a setting of the processor 1403. According to an embodiment, the transceiver 1401 may include a radio frequency (RF) block (or ab RF unit).

The transceiver 1401 transmits and receives a signal as described above. Accordingly, the transceiver 1401 may be referred to as a 'transmission unit', a 'reception unit', or a 'transmission/reception unit'. According to an embodiment, the transceiver 1401 may provide an interface for performing communication with other nodes in a network. In other words, the transceiver 1401 may convert a bit stream transmitted from the terminal 120 to another node, for example, another access node, another base station, an upper node, a core network, and the like, into a physical signal, and convert a physical signal received from another node into a bit stream.

The processor 1403 controls overall operations of the terminal 120. For example, the processor 1403 writes and reads data to and from the memory 1405. For example, the processor 1403 transmits and receives a signal through the transceiver 1401. According to an embodiment, the processor 1403 may obtain an MMSE weight of a receiver included in the terminal 120 based on an additional diagonal loading identified according to an estimated channel, an estimated noise and interference using reception reference signals, and a resolution of the receiver. For example, the processor 1403 may perform operations of the functional blocks of FIG. 8 or 9. For example, the processor 1403 may perform operations of FIGS. 12 and 13. In addition, FIG. 14 illustrates one processor, but embodiments of the present disclosure are not limited thereto. The terminal 120 may include at least one processor to perform the embodiments of the present disclosure. The processor 1403 may be referred to as a control unit or a control means. According to embodiments, the processor 1403 may control the terminal 120 to perform at least one of operations or methods according to the embodiments of the present disclosure.

The memory 1405 may store data such as a basic program, an application program, and setting information for an operation of the terminal 120. The memory 1405 may store various data used by at least one component (e.g., the transceiver 1401 and the processor 1403). The data may include, for example, software and input data or output data with respect to a command associated therewith. The memory 1405 may be composed of a volatile memory, a nonvolatile memory, or a combination of a volatile memory and a nonvolatile memory. Moreover, the memory 1405 may provide the stored data according to a request of the processor 1403.

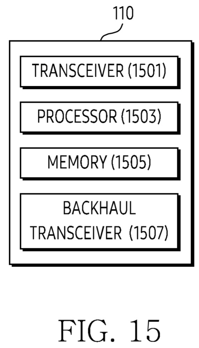

FIG. 15 illustrates an example of a functional configuration of a base station.

FIG. 15 illustrates a functional configuration of a base station (e.g., the base station 110). In receiving an uplink signal of a terminal (e.g., the terminal 120), the base station 110 or an RU (e.g., the RU 220) of the base station 110 may operate as a receiving end. Hereinafter, although described based on the base station 110, some descriptions of the base station 110 may also be applied to the RU 220 of the base station 110.

Referring to FIG. 15, the base station 110 may include a transceiver 1501, a processor 1503, memory 1505, and a backhaul transceiver 1507.

The transceiver 1501 may perform functions for transmitting and receiving a signal in a wired communication environment. The transceiver 1501 may include a wired interface for controlling a direct connection between a device and a device through a transmission medium (e.g., a copper wire, or optical fiber). For example, the transceiver 1501 may transmit an electrical signal to another device through a copper wire or perform conversion between an electrical signal and an optical signal.

The transceiver 1501 may perform functions for transmitting and receiving a signal in a wireless communication environment. For example, the transceiver 1501 may perform a conversion function between a baseband signal and a bit stream according to a physical layer standard of a system. For example, when transmitting data, the transceiver 1501 generates complex-valued symbols by encoding and modulating a transmission bit stream. Furthermore, when receiving data, the transceiver 1501 restores a reception bit stream by demodulating and decoding a baseband signal. Also, the transceiver 1501 may include a plurality of transmission/reception paths.

The transceiver 1501 transmits and receives a signal as described above. Accordingly, all or a portion of the transceiver 1501 may be referred to as a 'communication unit', a 'transmission unit', a 'reception unit', or a 'transmission/reception unit'. In addition, in the following description, transmission and reception performed through a wireless channel are used to include the processing performed as described above by the transceiver 1501.

The processor 1503 controls overall operations of the base station 110. The processor 1503 may be referred to as a control unit. For example, the processor 1503 transmits and receives a signal through the transceiver 1501 (or through the backhaul transceiver 1507). In addition, the processor 1503 writes and reads data to and from the memory 1505. Additionally, the processor 1503 may perform functions of a protocol stack required by a communication standard. According to an embodiment, the processor 1503 may obtain an MMSE weight of a receiver included in the base station 110 based on an additional diagonal loading identified according to an estimated channel, an estimated noise and interference using reception reference signals, and a resolution of the receiver. For example, the processor 1503 may perform operations on functional blocks of FIG. 8 or 9. For example, the processor 1503 may perform operations of FIGS. 12 and 13. Although only the processor 1503 is illustrated in FIG. 15, according to another implementation, the base station 110 may include two or more processors.

In the present disclosure, the operations of the processor 1503 may mean being executed by software or controlling hardware components such as a field programmable gate array (FPGA) or an application-specific integrated circuit (ASIC). In addition, the processor 1503 may include at least one of components such as software components, object-oriented software components, class components, and task components, and processes, functions, attributes, procedures, subroutines, segments of program code, drivers, firmware, microcode, circuitry, data, databases, data structures, tables, arrays, and variables. The processor 1503 may include at least one module, and the term "module" includes a unit configured with hardware, software, or firmware. For example, the module may be used interchangeably with terms such as logic, a logical block, a component, or circuitry. The module may be an integrated component or a minimum unit performing one or more functions, or a portion thereof. For example, the module may be configured with the ASIC.

The memory 1505 stores data such as a basic program, an application program, and setting information for an operation of the base station 110. The memory 1505 may be referred to as a storage unit. The memory 1505 may be composed of a volatile memory, a nonvolatile memory, or a combination of a volatile memory and a nonvolatile memory. In addition, the memory 1505 provides stored data according to a request of the processor 1503.

The base station 110 may further include the backhaul transceiver 1507 for connection with a core network or another base station. The backhaul transceiver 1507 provides an interface for performing communication with other nodes in a network. In other words, the backhaul transceiver 1507 converts a bit stream transmitted from the terminal to another node, for example, another access node, another base station, an upper node, a core network, and the like, into a physical signal, and converts a physical signal received from another node into a bit stream.

Referring to the above description, in inversely separating a signal for each transmission layer from a reception signal, a device and a method according to an embodiment of the present disclosure may solve an ill-posed problem due to a limited resolution generated by a channel estimation error, an estimation error of a noise and an interference, and the limited number of bits of the receiver through regularization. In addition, the device and the method according to the embodiment of the present disclosure may adjust the resolution of the receiver for pSINR. The pSINR may be limited due to this regularization, but the device and the method according to the embodiment of the present disclosure may solve the limitation of the maximum value of the SINR represented in Table 3 and solve a resolution problem in a high SNR region, by inverse-compensating the pSINR calculated with respect to a known diagonal loading component, and transmitting it to a scheduler. Accordingly, the device and the method according to the embodiment of the present disclosure may use a link adaptation technique such as a high-dimensional modulation/demodulation technique and multi-layer allocation. Furthermore, in calculating a log-likelihood ratio (LLR) before decoding, the device and the method according to the embodiment of the present disclosure may perform post-processing on the pSINR based on at least one of a bit-width of a channel decoder, modulation and coding scheme (MCS), or a regularized LLR corresponding to a bit that will have the smallest LLR of the MCS. Accordingly, the device and the method according to the embodiment of the present disclosure may prevent performance degradation due to overestimation of the pSINR due to the channel estimation or the estimation error of the noise and the interference, and secure stable link performance. For example, performance in the maximum MCS in which a decoder is supportable may be improved.

The effects that can be obtained from the present disclosure are not limited to those described above, and any other effects not mentioned herein will be clearly understood by those having ordinary knowledge in the art to which the present disclosure belongs.

In embodiments, a method performed by an electronic device in a wireless communication system may comprise obtaining a reception signal including a reception reference signal and a reception data signal. The method may comprise, based on channel estimation by using the reception reference signal, obtaining noise and interference estimation information. The method may comprise, based on information related to a resolution of a receiver of the electronic device, channel estimation information, and the noise and interference estimation information, obtaining a weight. The method may comprise, based on the weight and the information related to the resolution, obtaining a signal to interference plus noise ratio (SINR) of the reception reference signal. The method may comprise, based on the SINR and the reception data signal, performing decoding of the reception signal.

According to an embodiment, the information related to the resolution may include a diagonal loading matrix identified based on a covariance matrix of a channel, and a covariance matrix of a noise and an interference.

According to an embodiment, the obtaining the SINR may comprise calculating a SINR based on the weight, and based on the information related to the resolution, performing compensation of the calculated SINR.

According to an embodiment, the compensation may be performed based on the covariance matrix of the noise and the interference, and a diagonal loading matrix identified based on the resolution.

According to an embodiment, the method may comprise performing post-processing with respect to the obtained SINR. The post-processing may be performed based on at least one of a bit-width of a decoder of the electronic device, modulation and coding scheme (MCS), or a compensation value identified based on the information related to the resolution of the receiver.

According to an embodiment, the post-processing may be performed based on a regularized log-likelihood ratio (LLR) corresponding a bit having a minimum LLR of the MCS.

According to an embodiment, the method may comprise obtaining the noise and the interference estimation information based on the channel estimation and a diagonal loading identified based on an estimation error of the covariance matrix of the noise and the interference. The method may comprise performing whitening filtering based on information on the channel estimation, the noise and interference estimation information, and the reception data signal.

According to an embodiment, the estimation error of the covariance matrix of the noise and the interference may be identified based on a number of samples, a channel estimation error, or a relationship between a correlation value of a self-antenna and a correction value of another antenna.

According to an embodiment, the SINR may include a post detection SINR. The receiver may include a minimum mean square error (MMSE) receiver.

According to an embodiment, an electronic device in a wires communication system may comprise memory storing instructions. The electronic device may comprise a transceiver. The electronic device may comprise a processor. The instructions, when executed by the processor, may cause the electronic device to obtain a reception signal including a reception reference signal and a reception data signal. The instructions, when executed by the processor, may cause the electronic device to, based on channel estimation by using the reception reference signal, obtain noise and interference estimation information. The instructions, when executed by the processor, may cause the electronic device to, based on information related to a resolution of a receiver of the electronic device, channel estimation information, and the noise and interference estimation information, obtain a weight. The instructions, when executed by the processor, may cause the electronic device to, based on the weight and the information related to the resolution, obtain a signal to interference plus noise ratio (SINR) of the reception reference signal. The instructions, when executed by the processor, may cause the electronic device to, based on the SINR and the reception data signal, perform decoding of the reception signal.

According to an embodiment, the information related to the resolution may include a diagonal loading matrix identified based on a covariance matrix of a channel, and a covariance matrix of a noise and an interference.

According to an embodiment, the instructions, when executed by the processor, may cause the electronic device to calculate a SINR based on the weight. The instructions, when executed by the processor, may cause the electronic device to, based on the information related to the resolution, perform compensation of the calculated SINR.

According to an embodiment, the compensation may be performed based on the covariance matrix of the noise and the interference, and a diagonal loading matrix identified based on the resolution.

According to an embodiment, the instructions, when executed by the processor, may cause the electronic device to perform post-processing with respect to the obtained SINR. The post-processing may be performed based on at least one of a bit-width of a decoder of the electronic device, modulation and coding scheme (MCS), or a compensation value identified based on the information related to the resolution of the receiver.

According to an embodiment, the post-processing may be performed based on a regularized log-likelihood ratio (LLR) corresponding a bit having a minimum LLR of the MCS.

According to an embodiment, the instructions, when executed by the processor, may cause the electronic device to obtain the noise and the interference estimation information based on the channel estimation and a diagonal loading identified based on an estimation error of the covariance matrix of the noise and the interference. The instructions, when executed by the processor, may cause the electronic device to perform whitening filtering based on information on the channel estimation, the noise and interference estimation information, and the reception data signal.

According to an embodiment, the estimation error of the covariance matrix of the noise and the interference may be identified based on a number of samples, a channel estimation error, or a relationship between a correlation value of a self-antenna and a correction value of another antenna.

According to an embodiment, the SINR may include a post detection SINR. The receiver may include a minimum mean square error (MMSE) receiver.

In embodiments, a method performed by an electronic device in a wireless communication system may comprise obtaining a reception signal including a reception reference signal and a reception data signal. The method may comprise, based on channel estimation by using the reception reference signal, obtaining noise and interference estimation information. The method may comprise, based on channel estimation information and the noise and interference estimation information, obtaining a weight. The method may comprise, based on the weight, obtaining a first signal to interference plus noise ratio (SINR) of the reception reference signal. The method may comprise, based on the first SINR and a regularized log-likelihood ratio corresponding to a specific bit of modulation and coding scheme (MCS), obtaining a second SINR. The method may comprise, based on the second SINR and the reception data signal, identifying an LLR for decoding.

According to an embodiment, the method may comprise performing the decoding of the reception signal based on the LLR. The specific bit may include a most significant bit or a least significant bit of the MCS having a minimum LLR value.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A method performed by an electronic device in a wireless communication system, comprising:

   obtaining a reception signal including a reception reference signal and a reception data signal;
   based on channel estimation by using the reception reference signal, obtaining noise and interference estimation information;
   based on information related to a resolution of a receiver of the electronic device, channel estimation information, and the noise and interference estimation information, obtaining a weight;
   based on the weight and the information related to the resolution, obtaining a signal to interference plus noise ratio (SINR) of the reception reference signal; and
   based on the SINR and the reception data signal, performing decoding of the reception signal.

2. The method of claim 1,
   wherein the information related to the resolution includes a diagonal loading matrix identified based on a covariance matrix of a channel, and a covariance matrix of noise-and-interference.

3. The method of claim 1,
   wherein the obtaining the SINR comprises:

   calculating a SINR based on the weight; and
   based on the information related to the resolution, performing compensation of the calculated SINR.

4. The method of claim 3,
   wherein the compensation is performed based on the covariance matrix of noise-and-interference, and a diagonal loading matrix identified based on the resolution.

5. The method of claim 1, further comprising:

   performing post-processing with respect to the obtained SINR, and
   wherein the post-processing is performed based on at least one of a bit-width of a decoder of the electronic device, modulation and coding scheme (MCS), or a compensation value identified based on the information related to the resolution of the receiver.

**6.** The method of claim 5,
wherein the post-processing is performed based on a regularized log-likelihood ratio (LLR) corresponding a bit having a minimum LLR of the MCS.

**7.** The method of claim 1, further comprising:

obtaining the noise and the interference estimation information based on the channel estimation and a diagonal loading identified based on an estimation error of the covariance matrix of noise-and-interference; and performing whitening filtering based on information on the channel estimation, the noise and interference estimation information, and the reception data signal.

**8.** The method of claim 7,
wherein the estimation error of the covariance matrix of noise-and-interference is identified based on a number of samples, a channel estimation error, or a relationship between a correlation value of a self-antenna and a correction value of another antenna.

**9.** The method of claim 1,

wherein the SINR includes a post detection SINR, and
wherein the receiver includes a minimum mean square error (MMSE) receiver.

**10.** An electronic device in a wires communication system, comprising:

memory storing instructions;
a transceiver; and
a processor,
wherein the instructions, when executed by the processor, cause the electronic device to:

obtain a reception signal including a reception reference signal and a reception data signal;
based on channel estimation by using the reception reference signal, obtain noise and interference estimation information;
based on information related to a resolution of a receiver of the electronic device, channel estimation information, and the noise and interference estimation information, obtain a weight;
based on the weight and the information related to the resolution, obtain a signal to interference plus noise ratio (SINR) of the reception reference signal; and
based on the SINR and the reception data signal, perform decoding of the reception signal.

**11.** The electronic device of claim 10,
wherein the information related to the resolution includes a diagonal loading matrix identified based on a covariance matrix of a channel, and a covariance matrix of noise-and-interference.

**12.** The electronic device of claim 10,
wherein the instructions, when executed by the processor, cause the electronic device to:
calculate a SINR based on the weight; and
based on the information related to the resolution, perform compensation of the calculated SINR.

**13.** The electronic device of claim 12,
wherein the compensation is performed based on the covariance matrix of noise-and-interference, and a diagonal loading matrix identified based on the resolution.

**14.** The electronic device of claim 10,
wherein the instructions, when executed by the processor, cause the electronic device to:

perform post-processing with respect to the obtained SINR, and
wherein the post-processing is performed based on at least one of a bit-width of a decoder of the electronic device, modulation and coding scheme (MCS), or a compensation value identified based on the information related to the resolution of the receiver.

15. A method performed by an electronic device in a wireless communication system, comprising:

obtaining a reception signal including a reception reference signal and a reception data signal;

based on channel estimation by using the reception reference signal, obtaining noise and interference estimation information;

based on channel estimation information and the noise and interference estimation information, obtaining a weight;

based on the weight, obtaining a first signal to interference plus noise ratio (SINR) of the reception reference signal;

based on the first SINR and a regularized log-likelihood ratio corresponding to a specific bit of modulation and coding scheme (MCS), obtaining a second SINR; and

based on the second SINR and the reception data signal, identifying an LLR for decoding.

FIG. 1

FIG. 2

FIG. 3

FIG. 4

500 501 502 503 504 505 506 507 508 509 510 511 512 513

| Sym 0 | Sym 1 | Sym 2 | Sym 3 | Sym 4 | Sym 5 | Sym 6 | Sym 7 | Sym 8 | Sym 9 | Sym 10 | Sym 11 | Sym 12 | Sym 13 |

FIG. 5

EP 4 645 712 A1

FIG. 6

FIG. 7

**FIG. 8**

800

810 Reference Signal

820 Data Signal

834 Noise & Interference Estimation Unit

832 Channel Estimation Unit

838 Diagonal Loading Application Unit

836 MMSE Weight Calculation Unit

840 SINR Calculation & Loading Compensation Unit

Scheduler

842 SINR Post-processing Unit

844 Equalization Unit

846 LLR Calculator

848 Decoder

FIG. 9

FIG. 10

FIG. 11A

FIG. 11B

OBTAIN RECEPTION SIGNAL —1200

OBTAIN ESTIMATION INFORMATION ON NOISE AND INTERFERENCE BASED ON CHANNEL ESTIMATION —1205

OBTAIN WEIGHT —1210

OBTAIN SINR —1215

PERFORM SINR POST-PROCESSING —1220

IDENTIFY LLR —1225

PERFORM DECODING —1230

FIG. 12

```
┌─────────────────────────┐
│  OBTAIN RECEPTION SIGNAL │──1300
└─────────────────────────┘
            │
            ▼
┌─────────────────────────┐
│ OBTAIN ESTIMATION        │
│ INFORMATION ON           │──1305
│ NOISE AND INTERFERENCE   │
│ BASED ON CHANNEL         │
│ ESTIMATION               │
└─────────────────────────┘
            │
            ▼
┌─────────────────────────┐
│      OBTAIN WEIGHT       │──1310
└─────────────────────────┘
            │
            ▼
┌─────────────────────────┐
│     OBTAIN FIRST SINR    │──1315
└─────────────────────────┘
            │
            ▼
┌─────────────────────────┐
│ OBTAIN SECOND SINR BASED │
│ ON MOST SIGNIFICANT BIT  │──1320
│ OF MCS AND FIRST SINR    │
└─────────────────────────┘
            │
            ▼
┌─────────────────────────┐
│       IDENTIFY LLR       │──1325
└─────────────────────────┘
            │
            ▼
┌─────────────────────────┐
│     PERFORM DECODING     │──1330
└─────────────────────────┘
```

FIG. 13

120

TRANSCEIVER (1401)

PROCESSOR (1403)

MEMORY (1405)

FIG. 14

110

TRANSCEIVER (1501)

PROCESSOR (1503)

MEMORY (1505)

BACKHAUL
TRANSCEIVER (1507)

FIG. 15

# EP 4 645 712 A1

## INTERNATIONAL SEARCH REPORT

<table>
<tr><td colspan="2"></td><td>International application No.<br><br>**PCT/KR2023/021622**</td></tr>
</table>

**A. CLASSIFICATION OF SUBJECT MATTER**

**H04B 7/08**(2006.01)i; **H04B 7/0413**(2017.01)i; **H04L 25/02**(2006.01)i; **H04L 25/03**(2006.01)i

According to International Patent Classification (IPC) or to both national classification and IPC

**B. FIELDS SEARCHED**

Minimum documentation searched (classification system followed by classification symbols)

H04B 7/08(2006.01); H03M 13/23(2006.01); H04B 1/10(2006.01); H04B 1/7097(2011.01); H04B 1/712(2011.01); H04B 7/02(2006.01); H04B 7/04(2006.01); H04L 1/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기준 신호(reference signal), 채널 추정(channel prediction), 잡음 및 간섭 추정 (noise and interference prediction), 가중치(weight), 분해능(resolution), SINR

**C. DOCUMENTS CONSIDERED TO BE RELEVANT**

| Category* | Citation of document, with indication, where appropriate, of the relevant passages | Relevant to claim No. |
|---|---|---|
| Y | KR 10-2007-0036746 A (TELEFONAKTIEBOLAGET LM ERICSSON (PUBL)) 03 April 2007 (2007-04-03)<br>See paragraphs [0024]-[0025]; claims 4 and 6; and figure 3. | 1,3,5,9-10,12,14 |
| A | | 2,4,6-8,11,13,15 |
| Y | KR 10-0676034 B1 (INTEL DSPC) 29 January 2007 (2007-01-29)<br>See paragraphs [0012]-[0020]; claims 1 and 6; and figure 4. | 1,3,5,9-10,12,14 |
| A | KR 10-0715917 B1 (QUALCOMM INCORPORATED) 08 May 2007 (2007-05-08)<br>See claims 1-25 and 27-34. | 1-15 |
| A | KR 10-1430265 B1 (LG ELECTRONICS INC. et al.) 14 August 2014 (2014-08-14)<br>See paragraphs [0060]-[0066]; and figure 4. | 1-15 |

[✓] Further documents are listed in the continuation of Box C.  [✓] See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **18 April 2024** | **18 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/021622**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2027914 B1 (SAMSUNG ELECTRONICS CO., LTD. et al.) 02 October 2019 (2019-10-02)<br>See paragraphs [0040]-[0064]; and figure 2. | 1-15 |

Form PCT/ISA/210 (second sheet) (July 2022)

**INTERNATIONAL SEARCH REPORT**
Information on patent family members

| International application No. |
| --- |
| **PCT/KR2023/021622** |

| Patent document cited in search report | | | Publication date (day/month/year) | Patent family member(s) | | | Publication date (day/month/year) |
| --- | --- | --- | --- | --- | --- | --- | --- |
| KR | 10-2007-0036746 | A | 03 April 2007 | AT | 441987 | T | 15 September 2009 |
| | | | | CN | 101002418 | A | 18 July 2007 |
| | | | | CN | 101002418 | B | 12 May 2010 |
| | | | | EP | 1766836 | A1 | 28 March 2007 |
| | | | | EP | 1766836 | B1 | 02 September 2009 |
| | | | | JP | 2008-503124 | A | 31 January 2008 |
| | | | | JP | 4757259 | B2 | 24 August 2011 |
| | | | | US | 2005-0281324 | A1 | 22 December 2005 |
| | | | | US | 2013-0287066 | A1 | 31 October 2013 |
| | | | | US | 8934521 | B2 | 13 January 2015 |
| | | | | US | 9025638 | B2 | 05 May 2015 |
| | | | | WO | 2005-125075 | A1 | 29 December 2005 |
| KR | 10-0676034 | B1 | 29 January 2007 | AT | 333725 | T | 15 August 2006 |
| | | | | CN | 1606838 | A | 13 April 2005 |
| | | | | DE | 60213268 | T2 | 02 August 2007 |
| | | | | EP | 1435144 | A1 | 07 July 2004 |
| | | | | EP | 1435144 | B1 | 19 July 2006 |
| | | | | JP | 2005-506755 | A | 03 March 2005 |
| | | | | JP | 4131702 | B2 | 13 August 2008 |
| | | | | MY | 133588 | A | 30 November 2007 |
| | | | | US | 2003-0072396 | A1 | 17 April 2003 |
| | | | | US | 2006-0135101 | A1 | 22 June 2006 |
| | | | | US | 7039135 | B2 | 02 May 2006 |
| | | | | WO | 03-034615 | A1 | 24 April 2003 |
| KR | 10-0715917 | B1 | 08 May 2007 | AU | 2000-48523 | A1 | 05 December 2000 |
| | | | | BR | 0010475 | A | 15 July 2003 |
| | | | | CN | 1413403 | A | 23 April 2003 |
| | | | | EP | 1177662 | A1 | 06 February 2002 |
| | | | | HK | 1052597 | A1 | 19 September 2003 |
| | | | | HK | 1052597 | B | 24 November 2006 |
| | | | | JP | 2003-520463 | A | 02 July 2003 |
| | | | | JP | 2011-050064 | A | 10 March 2011 |
| | | | | US | 2002-0097785 | A1 | 25 July 2002 |
| | | | | US | 6377607 | B1 | 23 April 2002 |
| | | | | US | 6975669 | B2 | 13 December 2005 |
| | | | | WO | 00-70836 | A1 | 23 November 2000 |
| KR | 10-1430265 | B1 | 14 August 2014 | US | 2009-0232235 | A1 | 17 September 2009 |
| | | | | US | 8275062 | B2 | 25 September 2012 |
| KR | 10-2027914 | B1 | 02 October 2019 | US | 2015-0358953 | A1 | 10 December 2015 |
| | | | | US | 9807769 | B2 | 31 October 2017 |
| | | | | WO | 2014-109538 | A1 | 17 July 2014 |

Form PCT/ISA/210 (patent family annex) (July 2022)